(19) Europäisches Patentamt
European Patent Office
Office européen des brevets

(11) **EP 4 600 946 A1**

(12) **EUROPEAN PATENT APPLICATION**
published in accordance with Art. 153(4) EPC

(43) Date of publication:
**13.08.2025 Bulletin 2025/33**

(21) Application number: **23874932.9**

(22) Date of filing: **05.10.2023**

(51) International Patent Classification (IPC):
**G10K 11/16** (2006.01)   **G10K 11/162** (2006.01)
**G10K 11/172** (2006.01)

(52) Cooperative Patent Classification (CPC):
**G10K 11/172; G10K 11/16; G10K 11/162**

(86) International application number:
**PCT/JP2023/036325**

(87) International publication number:
**WO 2024/075807 (11.04.2024 Gazette 2024/15)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.10.2022 JP 2022160655**

(71) Applicant: **Mitsubishi Chemical Corporation
Tokyo 100-8251 (JP)**

(72) Inventors:
• **INOUE, Kazuma
Tokyo 100-8251 (JP)**
• **KOMAMURA, Takahiro
Tokyo 100-8251 (JP)**
• **SAITO, Yuya
Tokyo 100-8251 (JP)**

(74) Representative: **Hoffmann Eitle
Patent- und Rechtsanwälte PartmbB
Arabellastraße 30
81925 München (DE)**

(54) **SOUND-INSULATING SHEET MEMBER AND SOUND-INSULATING STRUCTURE COMPRISING SAME**

(57)    The present invention provides: a sound insulation sheet member that can be installed in places where installation space is limited and that insulates low-frequency sounds; and a sound insulation structure comprising the same.

The sound insulation sheet member comprises a sheet portion having rubber elasticity, and at least one convex portion having rubber elasticity provided on at least one surface of the sheet portion, wherein the convex portion has a space portion at least partially around the convex portion, and the convex portion has a slit portion on a tip side inner wall surface thereof.

[FIG. 1]

EP 4 600 946 A1

**Description**

TECHNICAL FIELD

The present invention relates to a sound insulation sheet member and a sound insulation structure comprising the same.

BACKGROUND ART

Buildings such as apartment buildings, office buildings, and hotels are required to block outdoor noise from automobiles, trains, airplanes, ships, and the like, as well as equipment noise and human voices generated inside the buildings, and to maintain a quietness suitable for indoor use. Vehicles such as automobiles, trains, airplanes, and ships are also required to block wind and engine noise and reduce indoor noise levels to provide quiet and comfortable spaces for passengers. Therefore, means have been researched and developed to block the propagation of noise and vibration from the outside to the inside of buildings or from the outside to the inside of vehicles, namely vibration damping and sound insulation means. In recent years, there has been a demand for lightweight damping and sound insulation members due to the increasing number of tall buildings and the like, as well as a demand for lightweight damping and sound insulation members in vehicles in order to improve the energy efficiency. In addition, in order to increase the degree of freedom in the design of buildings, vehicles, and their equipment, there has been a demand for damping and sound insulation members that can be adapted even to complex shapes.

In general, the properties of sound insulation materials that reduce transmitted sound by reflecting sound back follow the so-called mass law. In other words, the transmission loss, which serves as an index of the amount of noise reduction, is determined by the logarithm of the product of the mass of a sound insulation material and the frequency of the elastic or sound waves. Accordingly, in order to achieve a greater reduction in noise at a specific frequency, it is necessary to increase the mass of the sound insulation material. However, a method of increasing the mass of the sound insulation material may limit the amount of noise reduction due to the mass limitations of buildings, vehicles, and the like.

To solve the problem of increasing the mass of sound insulation members, the member structures have been improved in the past. For example, there are known methods, such as a method in which a plurality of rigid flat plate materials such as a gypsum board, concrete, a steel plate, a glass plate, and a resin plate are used in combination, and a method in which a gypsum board or the like is used to form a hollow double wall structure or a hollow triple wall structure.

In addition, the present applicants have previously proposed a sound insulation sheet member including a rubber elastic sheet and resonant portions having a base portion and a weight portion, in order to achieve sound insulation performance beyond the mass law (Patent Literature 1).

CITATION LIST

PATENT LITERATURE

Patent Literature 1: International Publication No. WO 2017/135409

SUMMARY OF THE INVENTION

PROBLEM TO BE SOLVED BY THE INVENTION

The sound insulation sheet member described in Patent Literature 1 has a high degree of design freedom and is highly versatile. However, changes in the size and material of the resonant portions alone have design limitations, making it difficult to use in places where installation space is limited and for low-frequency sound insulation.

The present invention has been made in view of such background technology. An object of the present invention is to provide a sound insulation sheet member that can be installed in places where installation space is limited and that insulates low-frequency sounds, and a sound insulation structure comprising the same.

Not limited to the object described above, the present invention can also be positioned as another object for achieving effects that are derived from various components shown in the embodiments of the present invention described below, and that cannot be achieved by the conventional technology.

MEANS FOR SOLVING PROBLEM

The present inventors have made intensive studies in order to achieve the object, and as a result, have found that a sheet member in which convex portions are provided on a sheet having rubber elasticity and a specific space portion is provided in each convex portion can be used to enable the object to be achieved, thereby leading to the completion of the present invention.

Specifically, the present invention provides the following various embodiments.

[1] A sound insulation sheet member, comprising:

a sheet portion having rubber elasticity; and
at least one convex portion having rubber elasticity provided on at least one surface of the sheet portion,
wherein the convex portion has a space portion, and
the convex portion has a slit portion on a tip side inner wall surface of the convex portion.

[2] The sound insulation sheet member according to the above-mentioned [1], wherein the slit portion is formed in a circumferential shape on the tip side inner wall of the convex portion.

[3] The sound insulation sheet member according to the above-mentioned [2], wherein the sheet portion has a space portion, and the space portion of the sheet portion is provided so as to penetrate from a surface of the sheet portion opposite to a surface on which the convex portion is provided to the space portion in the convex portion.

[4] The sound insulation sheet member according to above-mentioned [1], wherein the convex portion has a natural frequency satisfying a vibration mode of $d_P/d_Q \leq 0.8$ at, wherein $d_P$ represents a Z-component of a displacement field at an outer circumference of the tip side of the convex portion, and $d_Q$ represents a Z-component of a displacement field at a center portion of the tip side of the convex portion.

[5] The sound insulation sheet member according to the above-mentioned [3],

wherein the convex portion has a weight portion on the tip side inner wall thereof, and
the slit portion is formed in a circumferential shape around the weight portion.

[6] The sound insulation sheet member according to the above-mentioned [5], wherein the slit portion is formed in a circumferential shape along an outer wall shape of the convex portion.

[7] The sound insulation sheet member according to any one of the above-mentioned [2] to [6], wherein a ratio of a maximum cross-sectional area of the space portion to a cross-sectional area of the convex portion in a planar direction of the sheet portion is 90% or less.

[8] The sound insulation sheet member according to any one of the above-mentioned [2] to [7], wherein a ratio of a volume of the space portion to a volume of the convex portion is 10% or more.

[9] The sound insulation sheet member according to any one of the above-mentioned [2] to [8], wherein a part of the space portion in the convex portion is provided so as to reach at least one of the tip and side surfaces of the convex portion.

[10] The sound insulation sheet member according to any one of the above-mentioned [1] to [9], wherein a part of the space portion in the convex portion is provided so as to reach at least one of the tip and side surfaces of the convex portion.

[11] The sound insulation sheet member according to the above-mentioned [10], wherein a ratio ($D_P/D_W$) of an equivalent diameter $D_P$ of the convex portion, as represented by the following formula, to an equivalent diameter $D_W$ of the weight portion, as represented by the following formula, is 1.25 or more:

$$D_P = 4A_P/p_P;$$

and

$$D_W = 4A_W/p_W,$$

wherein $D_P$ represents an equivalent diameter of the convex portion,
$D_W$ represents an equivalent diameter of the weight portion,
$A_P$ represents an area of a region formed by the outer circumference of the cross-section of the convex portion in the planar direction of the sheet portion,
$A_W$ represents an area of a region formed by the outer circumference of the cross-section of the weight portion in the planar direction of the sheet portion,
$p_P$ represents a length of the outer circumference of the cross-section of the convex portion in the planar direction of the sheet portion, and
$p_W$ represents a length of the outer circumference of the cross-section of the weight portion in the planar direction of the sheet portion.

[12] The sound insulation sheet member according to the above-mentioned [10] or [11], wherein a ratio ($H/D_P$) of a total value H of a height of the convex portion and a thickness of the sheet portion to an equivalent diameter $D_P$, as represented by the following formula, is 2.1 or less;

$$D_P = 4A_P/p_P,$$

wherein $D_P$ represents an equivalent diameter of the convex portion,
$A_P$ represents an area of a region formed by the outer circumference of the cross-section of the convex portion in the planar direction of the sheet portion, and
$p_P$ represents a length of the outer circumference of the cross-section of the convex portion in the planar direction of the sheet portion.

[13] The sound insulation sheet member according to any one of the above-mentioned [10] to [12], wherein at least a part of the weight portion is embedded in the convex portion.
[14] The sound insulation sheet member according to any one of the above-mentioned [1] to [13], being an integrally molded product.
[15] A sound insulation structure comprising at least: the sound insulation sheet member according to any one of the above-mentioned [1] to [14]; and a support that supports the sound insulation sheet member.
[16] The sound insulation structure according to the above-mentioned [15], wherein the sheet portion and the convex portion each independently contain at least one selected from the group consisting of thermosetting elastomers, photocurable elastomers, and thermoplastic elastomers.

EFFECT OF THE INVENTION

The present invention provides a sound insulation sheet member that can be installed in places where installation space is limited and that insulates low-frequency sounds, and a sound insulation structure comprising the same.

BRIEF DESCRIPTION OF DRAWINGS

FIG. 1 shows a schematic perspective view of a sound insulation sheet member according to a first embodiment.
FIG. 2 shows a cross-sectional view of the I-I line in FIG. 1.
FIG. 3 shows exemplary cross-sectional views of the sound insulation sheet member according to the first embodiment.
FIG. 4 shows exemplary cross-sectional views of a sound insulation sheet member illustrating embodiments of a space portion.
FIG. 5 shows a diagram of a simplified model illustrating an operating principle of a sound insulation structure according to the present embodiment.
FIG. 6 shows a diagram of a simplified model illustrating an operating principle of a sound insulation structure according to the present embodiment.
FIG. 7 shows a schematic perspective view of a sound insulation sheet member according to a second embodiment.
FIG. 8 shows a cross-sectional view of the II-II line in FIG. 7.
FIG. 9 shows exemplary cross-sectional views of a sound insulation sheet member illustrating embodiments of a space portion.
FIG. 10 shows diagrams explaining a longitudinal extension and contraction vibration mode and a trampoline vibration mode.
FIG. 11 shows diagrams of a simplified model illustrating the operating principle of a sound insulation structure according to the present embodiment.
FIG. 12 shows a diagram of a simplified model illustrating an operating principle of a sound insulation structure according to the present embodiment.
FIG. 13 shows a schematic perspective view of a sound insulation structure including the sound insulation sheet member according to the first embodiment.
FIG. 14 shows a schematic perspective view of a sound insulation structure including the sound insulation sheet member according to the second embodiment.

FIG. 15 shows an example of a support and a cross-sectional view of a sound insulation structure including the support and a sound insulation sheet member.

FIG. 16 shows schematic diagrams of a unit cell used to calculate natural frequencies.

FIG. 17 shows schematic diagrams of a unit cell without a weight portion.

FIG. 18 shows a graph of the results of protrusion vibration experiments in Examples.

FIG. 19 shows a graph of the results of protrusion vibration experiments in Examples.

MODE(S) FOR CARRYING OUT THE INVENTION

Embodiments of the present invention are described below with reference to the drawings.

The following embodiments are illustrative for describing the present invention, and the present invention is not intended to be limited to only such embodiments. In the following description, positional relationships, such as top and bottom or right and left, are based on the positional relationships shown in the drawings, unless otherwise specified. The dimensional ratios in the drawings are not limited to those shown.

As used herein, the designation of a numerical value range of, for example, "1 to 100" includes both the lower limit value "1" and the upper limit value "100". The same applies to the designations of other numerical value ranges.

<Sound Insulation Sheet Member>

A sound insulation sheet member according to an embodiment of the present invention (also simply referred to as "sound insulation sheet member") is a sound insulation sheet member including a sheet portion having rubber elasticity, and at least one convex portion having rubber elasticity provided on at least one surface of the sheet portion, wherein the convex portion has a space portion at least partially around the provided convex portion, and the convex portion has a slit portion on a tip side inner wall surface thereof.

Specific embodiments of the present invention are described below with reference to the drawings, but are not limited thereto. As used herein, the term "plurality" means two or more.

<First Embodiment>

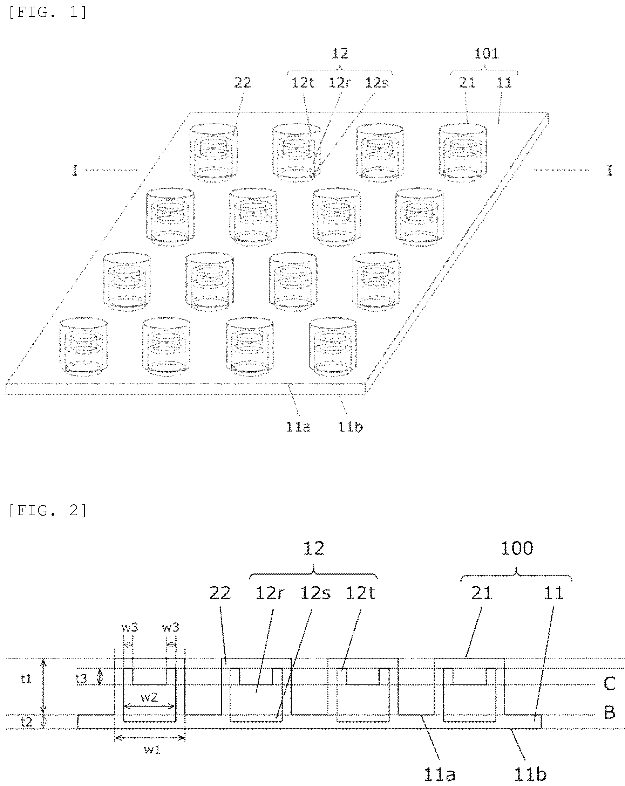

FIG. 1 shows an example of the sound insulation sheet member according to the present embodiment (first embodiment). The sound insulation sheet member 100 shown in FIG. 1 includes a sheet portion 11 having rubber elasticity, and at least one convex portion 21 having rubber elasticity provided on one surface of the sheet portion 11, wherein the at least one convex portion 21 has a space portion 12. The sheet portion 11 has a sheet surface 11a and a sheet surface 11b. FIG. 2 shows a cross-sectional view of the I-I line in FIG. 1.

The sound insulation sheet member 100 shown in FIG. 2 is an embodiment in which both a sheet portion 11 and a convex portion 21 have a space portion 12, wherein the convex portion 21 is composed of a convex forming portion 22 that forms a convex shape provided around the space portion 12, and the space portion 12; and the space portion 12 is composed of a space portion 12r and a slit portion (also referred to as "space portion 12t") that the convex portion 21 has, and a space portion 12s that the sheet portion has.

The space portion 12t is formed on a tip side inner wall surface 22', which is an inner wall surface at a tip side of the convex portion 21 (opposite to the sheet portion 11). The formation of the space portion 12t facilitates trampoline vibration described below, and allows for low-frequency sound insulation or a reduction in height of the convex portion.

The dotted line B shown in FIG. 2 represents a line indicating a boundary between the sheet portion 11 and the convex portion 21. As shown in FIG. 2, t1 represents a height of the convex portion 21, t2 represents a thickness of the sheet portion 11, t3 represents a height of the space portion 12t (groove depth of the slit), w1 represents a width of the convex portion 21, w2 represents a cross-sectional width of the space portion 12 in a planar direction of the sheet portion, and w3 represents a cross-sectional width of the space portion 12t. The dotted line C in FIG. 2 represents a line indicating a boundary between the space portion 12t and the space portion 12r.

The region where the convex portion 21 is provided in the sheet portion 11 is a region of the sheet portion 11 that overlaps with the convex portion 21 in a plan view of the sound insulation sheet member 100, and is a region of the sheet portion 11 having the width indicated by w1 in FIG. 2.

As used herein, the space portion 12 is treated as a general term for the space portion 12r, the space portion 12s, and the space portion 12t. In other words, the space portion 12 in the description of the convex portion 21 refers to the space portion 12r and the space portion 12t, the space portion 12 in the description of the sheet portion 11 refers to the space portion 12s, and the space portion 12 in the description where no particular distinction is made applies to any of the space portion 12r, the space portion 12s, and the space portion 12t.

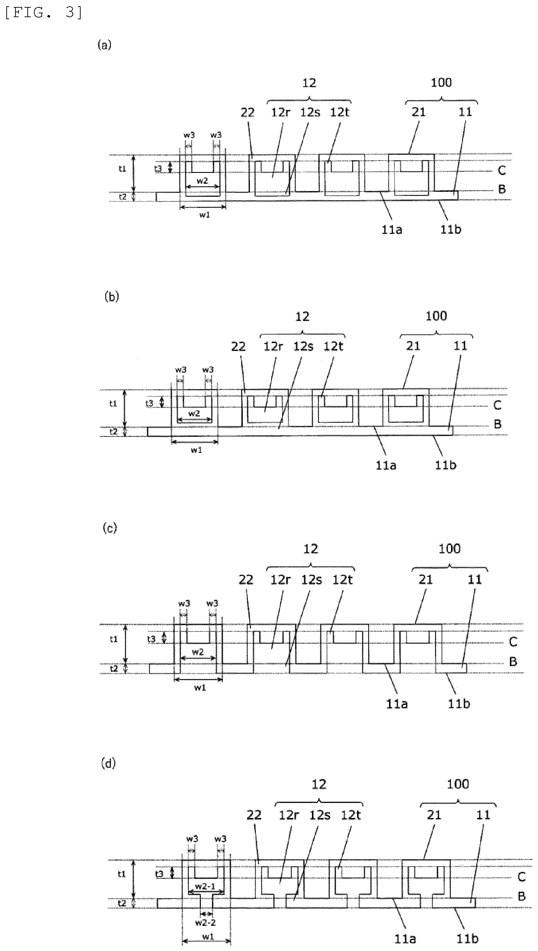

FIGS. 3 (a) to (d) show examples of the embodiment of the sound insulation sheet member 100.

The sound insulation sheet member 100 shown in FIG. 3 (a) is an embodiment in which, as in FIG. 2, both a sheet portion 11 and a convex portion 21 have a space portion 12.

The sound insulation sheet member 100 shown in FIG. 3 (b) is an embodiment in which only a convex portion 21 has a space portion 12.

The sound insulation sheet member 100 shown in FIG. 3 (c) is an embodiment in which both a sheet portion 11 and a convex portion 21 have a space portion 12, and the space portion 12 is provided so as to penetrate from the surface of the sheet portion 11 opposite to the side where the convex portion 21 is provided to the space portion 12 of the convex portion 21. The present embodiment is preferred from the viewpoint of achieving both ease of molding and sound insulation performance.

The sound insulation sheet member 100 shown in FIG. 3 (d) has a configuration similar to that of the sound insulation sheet member 100 shown in FIG. 3 (c) described above, and is an embodiment in which a cross-sectional width w2-2 of the space portion 12s of the sheet portion in a planar direction of the sheet portion is smaller than a cross-sectional width w2-1 of the space portion 12r of the convex portion in the planar direction thereof.

The convex portion, when it has a space portion, may have an embodiment in which it does not have a through-hole connecting the space portion to the outside. This through-hole means a through-hole that directly connects the convex portion to the outside, and is not subject to a through-hole that connects the space portion of the convex portion to the outside via the sheet portion as shown in FIG. 3 (c). The present embodiment is preferred from the viewpoint of improving sound insulation performance.

For example, when a sound wave is incident from a noise source on the side of the sheet portion 11, the sound insulation sheet member 100 generates vibration of the sheet portion 11 and/or the convex portion 21. When the frequency of the incident sound wave and the natural frequency of the convex portion 21 are close to or coincident with each other, the convex portion resonates and vibrates violently. At this time, the two forces acting on the sheet portion 11, which are (1) the force generated by the sound wave and (2) the force generated by the vibration of the convex portion 21, are in opposite directions, thereby suppressing the vibration of the sheet portion 11. As a result, high sound insulation performance beyond the mass law can be achieved.

The sound insulation sheet member 100 according to the present embodiment can be easily reduced in height because good sound insulation performance can be achieved with a size smaller than that of general sound insulation members, and the size and shape of the convex portion, the space portion, and the sheet portion can be appropriately changed according to the installation environment and conditions, thereby enabling the member to be installed in places where the installation space is limited.

Each component of the sound insulation sheet member 100 is described in detail below.

[Sheet Portion]

The sheet portion 11 is a sheet portion having rubber elasticity, and although the embodiment thereof is not particularly limited, it may have rubber elasticity due to molecular motion or the like of a resin (organic polymer). The sheet portion 11, when a sound wave is incident from a noise source, also functions as a vibrator (resonator) that vibrates at a certain frequency. The sheet portion 11 may have a space portion 12. The space portion 12 may be integrated with the space portion that the convex portion 21 has, as shown in FIG. 3 (a).

The material constituting the sheet portion 11 preferably includes at least one selected from the group consisting of thermosetting elastomers, photocurable elastomers, and thermoplastic elastomers, from the viewpoint of imparting rubber elasticity to the sheet portion.

Among these, photocurable elastomers are preferred because, in the case where the sheet portion is produced by casting using a metal mold or the like, it is necessary to fill the cavity on the mold surface with elastomers, and they can fill the cavity in a relatively low-viscosity liquid state before curing to increase the filling rate.

Specific examples of the material constituting the sheet portion 11 include:

thermosetting resin elastomers such as vulcanized thermosetting resin elastomers, urethane-based thermosetting resin elastomers, silicone-based thermosetting resin elastomers, fluorine-based thermosetting resin elastomers, and acrylic thermosetting resin elastomers;
photocurable elastomers such as acrylic photocurable elastomers, silicone-based photocurable elastomers, and epoxy-based photocurable elastomers; and
thermoplastic elastomers such as olefin-based thermoplastic elastomers, styrene-based thermoplastic elastomers, PVC-based thermoplastic elastomers, urethane-based thermoplastic elastomers, ester-based thermoplastic elastomers, amide-based thermoplastic elastomers, silicone-based thermoplastic elastomers, and acrylic thermoplastic elastomers, which are chemically crosslinked natural rubber or synthetic rubber.

Other examples of the thermosetting elastomers, the photocurable elastomers, and the thermoplastic elastomers include rubber. Specific examples thereof include, but are not particularly limited to, natural rubber, isoprene rubber, butadiene rubber, styrene-butadiene rubber, chloroprene rubber, nitrile rubber, polyisobutylene rubber, ethylene-propylene rubber, chlorosulfonated polyethylene rubber, acrylic rubber, fluororubber, epichlorohydrin rubber, polyester rubber, urethane rubber, silicone rubber, and modified products thereof. These can be used singly or in combination of two or more types thereof.

Among these, natural rubber, isoprene rubber, butadiene rubber, styrene-butadiene rubber, chloroprene rubber, nitrile rubber, polyisobutylene rubber, ethylene-propylene rubber, chlorosulfonated polyethylene rubber, acrylic rubber, fluororubber, epichlorohydrin rubber, polyester rubber, urethane rubber, silicone rubber, and modified products thereof are preferred; and silicone rubber, acrylic rubber, and modified products thereof are more preferred. The use of these materials tends to result in good heat and cold resistance.

The sheet portion 11 may contain various additives, such as a flame retardant, an antioxidant, a plasticizer, and a colorant, as long as the sheet has so-called rubber elasticity.

The flame retardant is an additive that is blended to make combustible materials less flammable or prevent them from igniting. Specific examples thereof include: but are not particularly limited to, bromine compounds such as pentabromodiphenyl ether, octabromodiphenyl ether, decabromodiphenyl ether, tetrabromobisphenol A, hexabromocyclododecane, and hexabromobenzene; phosphorus compounds such as triphenyl phosphate; chlorine compounds such as chlorinated paraffin; antimony compounds such as antimony trioxide; metal hydroxides such as aluminum hydroxide; nitrogen compounds such as melamine cyanurate; and boron compounds such as sodium borate.

The antioxidant is an additive that is blended to prevent oxidation degradation. Specific examples thereof include, but are not particularly limited to, phenolic antioxidants, sulfur-based antioxidants, and phosphorus-based antioxidants.

The plasticizer is an additive that is blended to improve flexibility and weather resistance. Specific examples thereof include, but are not particularly limited to, phthalate esters, adipate esters, trimellitate esters, polyesters, phosphate esters, citrate esters, sebacate esters, azelate esters, maleate esters, silicone oil, mineral oil, vegetable oil, and modified products thereof.

Examples of the colorant include dyes and pigments.

These various additives can be used singly or in combination of two or more types.

The shape of the sheet portion 11 is square in a plan view in the sound insulation sheet member 100 shown in FIG. 1, but is not limited thereto. Any shape can be adopted in a plan view, including: a polygonal shape such as a triangular shape, a rectangular shape, a square shape, a trapezoidal shape, a diamond shape, a pentagonal shape, or a hexagonal shape; a circular shape; an elliptical shape; or an irregular shape that is not classified as any of the above.

The thickness t2 of the sheet portion 11 is not particularly limited and can be adjusted appropriately. When the thickness t2 of the sheet portion 11 is thick, the natural frequency of the convex portion 21 tends to shift to the low-frequency side, and when the thickness t2 of the sheet portion 11 is thin, the natural frequency of the convex portion 21 tends to shift to the high-frequency side.

The thickness of the sheet portion 11 is preferably 10 $\mu$m or more, more preferably 50 $\mu$m or more, and even more preferably 100 $\mu$m or more, from the viewpoints of sound insulation performance, mechanical strength, flexibility, and handling properties. In addition, the thickness of the sheet portion 11 is preferably 2 mm or less, more preferably 1 mm or less, and even more preferably 500 $\mu$m or less. The thickness of the sheet portion 11 may not be uniform over the entire sheet portion. For example, depending on how the sound insulation sheet member 100 is installed, or if it is desired to partially vary the sound insulation performance, the sheet portion may be inclined to the extent that it can still be recognized as a sheet. When the thickness of the sheet portion is not uniform, the thickness t2 of the sheet portion 11 is calculated as an average value. However, from the viewpoints of ensuring ease of molding and stable sound insulation performance, the thickness of the sheet portion 11 is preferably uniform.

The sheet portion 11 preferably has a Young's modulus of 0.01 MPa or more, more preferably 0.1 MPa or more; and preferably 100 MPa or less, more preferably 10 MPa or less, from the viewpoints of sound insulation performance, mechanical strength, flexibility, handling properties, and productivity.

The Young's modulus as used herein refers to the ratio of the force (stress) acting per unit cross-sectional area of a sample to the deformation rate (strain) when an external force is applied in a uniaxial direction, which is the value of the storage vertical elastic modulus at 25°C and 10 Hz measured by the forced vibration non-resonance method of JIS K 6394:2007 "Vulcanized rubber and thermoplastic rubber - Determination of dynamic properties".

The sheet portion 11 preferably has a glass transition temperature of 0°C or lower from the viewpoint of reducing the temperature dependence of the sound insulation properties at low temperatures. The lower the glass transition temperature of the sheet portion 11, the higher the cold resistance is, and the lower the temperature dependence of the elastic modulus around 0°C, which tends to make the sound insulation performance less dependent on the environmental temperature. The glass transition temperature of the sheet portion 11 is more preferably -10°C or lower, even more preferably -20°C or lower, and particularly preferably -30°C or lower. As used herein, the glass transition temperature of the sheet portion 11 refers to the peak temperature of the loss tangent in the dynamic viscoelasticity measurement at the frequency of 10 Hz described above, especially in the temperature dependence measurement.

[Convex Portion]

At least one convex portion 21 is provided on the sheet portion 11, and functions as an oscillator (resonator) that vibrates at a certain frequency when a sound wave is incident from a noise source.

The convex portion 21 has a space portion 12 and may be composed of, for example, the space portion 12 continuing from the sheet portion 11 and a convex forming portion 22 that covers the periphery of the space portion 12, as in the sound insulation sheet member 100 shown in FIG. 2. The convex portion 21 effectively functions as a resonator in which a portion at the tip side of the convex forming portion 22, especially a portion at the tip side beyond the space portion 12r, acts as a weight, and a portion at the bottom end of the convex forming portion 22 acts as a spring.

Each parameter of the convex portion 21 described below is expressed as an average value of the parameters of all convex portions provided, unless otherwise specified. The portion at the tip side of the convex portion 21 (convex forming portion 22) may be a region in an area generally recognized as the tip side. Specifically, it may be a region of 50% of the entire region of the convex portion 21 toward the tip side in the height direction of the convex portion 21, or it may be, if the convex portion has a space portion, a region further toward the tip side than the end of the space portion on the sheet side; and from the viewpoint of ensuring the effects of the present invention, it is preferably defined by the latter.

The convex portion 21 may be provided on at least one surface of the sheet portion 11, and may be provided on only one surface or on both surfaces thereof; and from the viewpoint of improving sound insulation performance, it is preferably provided on both surfaces thereof. However, in the case of providing a support described below to form a sound insulation structure, the convex portion 21 is preferably provided only on one surface of the sheet portion 11 from the viewpoints of ease of production and stabilization of performance.

In the case where the convex portion is provided on both surfaces of the sheet portion, the parameters of the convex portion as used herein are treated as parameters of the convex portion provided on one surface, unless otherwise specified. For example, for the conditions for the height of the convex portion described below, the parameters of the convex portion provided on one surface of the sheet portion (the average value if a plurality of convex portions are provided) are applied. In addition, the parameters of the sound insulation sheet member as used herein are treated as parameters of the entire sound insulation sheet including all convex portions provided on both surfaces of the sheet portion.

The arrangement, number, and size of the convex portion 21 can be adjusted appropriately according to the desired performance and are not particularly limited. The convex portion 21 is provided in contact with at least one surface of the sheet portion 11.

For example, the sound insulation sheet member 100 shown in FIG. 1 has a plurality of convex portions 21 arranged in a lattice pattern at equal intervals, but the arrangement of the convex portions 21 is not particularly limited thereto. The plurality of convex portions 21 may be arranged, for example, in a staggered or random pattern. The sound insulation mechanism of the sound insulation sheet member according to the present embodiment does not utilize Bragg scattering as in so-called phononic crystals, and thus the convex portions 21 do not necessarily have to be arranged at regular and periodic intervals.

The number of convex portions 21 provided per unit area is not particularly limited as long as the convex portions 21 can be arranged so as not to interfere with each other, such as touching each other.

The maximum number of convex portions 21 per unit area varies depending on the shape or the like of the convex portions 21, and, for example, when the convex portions 21 are columnar, the height direction of each column is parallel to the sheet normal direction, and the cross-sectional diameter of each column is 1 cm, it is preferably 100 or less per 100 $cm^2$.

The minimum number of convex portions 21 per unit area is preferably 1 or more per 100 $cm^2$, more preferably 10 or more, and even more preferably 50 or more, for example, when the convex portions 21 are columnar, the height direction of each column is parallel to the sheet normal direction, and the cross-sectional diameter of each column is 1 cm. When the number of convex portions 21 is equal to or more than the preferred lower limit described above, higher sound insulation performance tends to be achieved. In addition, the number of convex portions 21 is equal to or less than the preferred upper limit described above, it is easier to reduce the weight of the entire sheet.

The height (length in the normal direction of the sheet portion 11) of a plurality of convex portions 21 may or may not be uniform, and it is preferably uniform from the viewpoints of ensuring ease of molding and stable sound insulation performance. The height of the highest convex portion (maximum height of convex portions 21) of the plurality of convex portions 21 can be adjusted appropriately according to the desired performance and is not particularly limited. The maximum height of the convex portions 21 is preferably 100 $\mu$m or more, more preferably 500 $\mu$m or more, and even more preferably 1 mm or more, from the viewpoints of ease of molding and improvement of productivity. In addition, it is preferably 50 mm or less, more preferably 40 mm or less, and even more preferably 30 mm or less. By adjusting the height of the convex portions 21 within the above preferred range, the mold releasability of the sheet portion 11 provided with the convex portions 21 (i.e., the sound insulation sheet member 100) tends to be improved.

In a plane parallel to the sheet surface 11a of the sheet portion 11 at a height position where the sum of the cross-sectional areas of a plurality of convex portions 21 is maximum, the cross-sectional area of a convex portion having the largest area among the cross-sections of the convex portions included in the plane is preferably 8,000 mm$^2$ or less, more preferably 2,000 mm$^2$ or less, and even more preferably 500 mm$^2$ or less; and the cross-sectional area of a convex portion having the smallest area is preferably 50 $\mu$m$^2$ or more, more preferably 8,000 $\mu$m$^2$ or more, and even more preferably 0.15 mm$^2$ or more.

In the case where the convex portions are columnar as shown in FIG. 1, in a plane parallel to the sheet surface 11a of the sheet portion 11 at a height position where the sum of the cross-sectional areas of a plurality of the convex portions 21 is maximum, the diameter of a circle having the largest diameter among the cross-sections of the convex portions included in the plane is preferably 100 mm or less, more preferably 50 mm or less, and even more preferably 25 mm or less. In addition, the diameter of a circle having the smallest diameter is preferably 10 $\mu$m or more, more preferably 100 $\mu$m or more, and even more preferably 1 mm or more. By adjusting the cross-sectional area of the convex portion 21 and the diameter of the circle in the case of a column within the above preferred ranges, it is possible to secure a predetermined number or more of the convex portions 21 to be provided on the sheet surface 11a of the sheet portion 11 to achieve even better sound insulation performance, and the ease of forming and productivity also tend to be further improved.

At least one convex portion 21 is provided on at least one surface of the sheet portion 11 as described above. However, the material constituting the convex portion 21, the arrangement, shape, size, and installation direction of the convex portion 21 do not necessarily have to be the same for all of the plurality of the convex portions 21. By providing plural types of convex portions 21 that differ from each other in at least one of these types, an effect such as expanding the frequency range in which high sound insulation performance is exhibited may be achieved.

The cross-sectional shape of the convex portion 21 is not particularly limited, and examples thereof include: a polygonal prism shape such as a triangular prism shape, a rectangular prism shape, a trapezoidal prism shape, a pentagonal prism shape, or a hexagonal prism shape; a columnar shape; an elliptical prism shape; a truncated pyramid shape; a truncated cone shape; a pyramid shape; a cone shape; a cylindrical shape; or an irregular shape that is not classified as any of the above. Among these, a rectangular prism shape or a columnar shape is preferred from the viewpoint of productivity. The shape can be appropriately selected according to the application from the viewpoints of sound insulation performance, production costs, handling properties, and the like.

[Space Portion]

The space portion 12 may be provided at least in the convex portion 21; and in order to achieve good sound insulation performance, it is preferred that the space portion 12 be provided in both the convex portion 21 and the region of the sheet portion 11 where the convex portion 21 is provided, and it is particularly preferred that a single space portion 12 be provided that connects over both the convex portion 21 and the region of the sheet portion 11 where the convex portion 21 is provided. For example, the space portion 12 having a substantially columnar shape may be provided continuously in the sheet portion 11 and the convex portion 21 as shown in FIG. 1. As used herein, the region combining each convex portion and the region of the sheet portion where the convex portion is provided is also referred to as a "composite region".

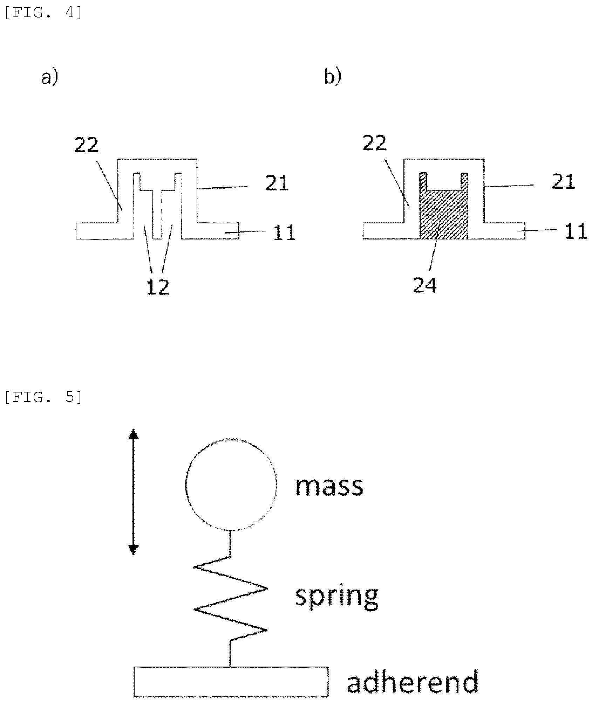

The shape of the space portion 12 is not particularly limited, and examples thereof include: a polygonal prism shape such as a triangular prism shape, a rectangular prism shape, a trapezoidal prism shape, a pentagonal prism shape, or a hexagonal prism shape; a columnar shape; an elliptical prism shape; a truncated pyramid shape; a truncated cone shape; a pyramid shape; a cone shape; a cylindrical shape; or an irregular shape that is not classified as any of the above. The number of space portions 12 in each composite region is not limited to one, and, for example, the space portion 12 may be divided as shown in FIG. 4 (a). The space portion 12 does not have to be composed only of air, and, for example, as shown in FIG. 4 (b), a sound absorbing material 24 such as foam or nonwoven fabric may be provided inside as long as it does not inhibit the resonance of the convex portion 21.

As shown in FIG. 1, a slit-shaped space portion 12t may be provided continuously at the tip side of the space portion 12r in the convex portion 21.

The space portion 12t is formed on a tip side inner wall surface 22', which is an inner wall surface at the tip side of the convex portion 21 (opposite to the sheet portion 11). The shape of the space portion 12t, which is a slit portion, is preferably formed in a circumferential shape, but is not particularly limited thereto. By forming a slit portion in a circumferential shape, the thickness of the convex forming portion 22 in the area where the slit is formed can be made thinner, thereby enabling the trampoline vibration described below to be easily generated. The slit portion can be formed circumferentially, for example, along the cross-sectional shape of the convex portion 21, but the circumferential shape is not particularly limited thereto. In FIG. 1, the cross-sectional shape of the convex portion 21 is columnar, and the circumferential shape of the slit (space portion 12t) is also columnar.

The slit depth t3 is in a range of 99% or less of the height t1 of the convex portion 21, and preferably 85% or less of the height t1. When the slit depth t3 is more than 0% of the height t1 of the convex portion 21, the effect of lowering the natural frequency or reducing the height can be achieved, and for the ease of production, it is preferably 0.05 mm or more, more preferably 0.1 mm or more.

The cross-sectional width w3 of the space portion 12 in a planar direction of the sheet portion is in a range of 99% or less of the width w1 of the convex portion 21, and preferably 45% or less of the width w1. When the cross-sectional width w3 of the space portion 12 in the planar direction of the sheet portion is more than 0% of the width w1 of the convex portion 21, the effect of lowering the natural frequency or reducing the height can be achieved, and for the ease of production, it is preferably 0.05 mm or more, more preferably 0.1 mm or more.

The sound insulation sheet member 100 can achieve the effect of lowering the natural frequency or reducing the height by having a space portion, and, as shown in FIG. 3 (c) or FIG. 3 (d), it can also achieve the further effect described below by configuring at least the sheet portion 11 to have a space portion 12 and by configuring a part of the space portion 12 to reach the surface of the sheet portion 11 on the side opposite to the side where the convex portion 21 is provided.

When the sound insulation sheet member 100 is provided on a support that supports the member, air may enter between the sheet portion 11 and an adherend. However, when the sound insulation sheet member 100 has the embodiment as shown in FIG. 3 (c) or FIG. 3 (d) in which at least the sheet portion 11 has a space portion 12 and a part of the space portion 12 is provided so as to reach the surface of the sheet portion 11 on the side opposite to the side where the convex portion 21 is provided, a space portion is present in a part of the contact area between the sound insulation sheet member and the support, thereby releasing air pockets into the space portion and filling an adhesive between the sound insulation sheet member 100 and the adherend. Therefore, peeling of the sound insulation sheet member 100 can be suppressed, and the stability is superior compared to the case where there is no space portion present in a part of the contact area between the sound insulation sheet member and the support.

When an adhesive is applied to bond the sound insulation sheet member to the support, the thickness of the adhesive may be uneven. However, the sound insulation sheet member 100 in FIG. 3 (c) or FIG. 3 (d) allows excess adhesive to be released into the concave portion under the sheet when the thickness of the adhesive is equalized, so that the thickness of the adhesive layer can be uniformed.

There is also an advantage of ease of production by not having a portion where the cross-sectional area of the space portion 12 increases from the surface of the sheet portion 11 on the side opposite to the side where the convex portion 21 is provided to the space portion 12, as shown in FIG. 3 (c). By not having a portion with a large cross-sectional area as described above, a producing method that uses a mold having a concave shape and a mold having a convex shape can be used.

In addition, by forming a space portion 12 at a position corresponding to the convex portion 21 on the sheet surface opposite to the side where the convex portion 21 is provided, the natural frequency of the convex portion 21 can be lowered or the height of the convex portion 21 can be reduced. The above advantage refers to the fact that, compared to a convex portion 21 having no space portion 12, the frequency can be lowered when comparing the natural frequency with a convex portion having the same external shape, and the height can be lowered when comparing the height with a convex portion having a shape to be the same natural frequency. The effects of the action are similar to those described above and are detailed below.

The present feature can be described using a spring-mass model in which the convex portion 21 is expressed as a resonator having a spring portion as a unit, as shown in FIG. 5. The arrows in FIG. 5 indicate the direction of resonance. In FIG. 5, the portion (mass) indicated by a circle corresponds to the portion at the tip side of the convex portion 21, especially the portion at the tip side beyond the space portion 12 of the convex portion 21; the portion indicated by a spring corresponds to the portion at the bottom end of the convex portion 21, especially in the case of having a space portion 12 that reaches the sheet portion 11, the convex forming portion 22 around the space portion 12; and the portion indicated by a rectangle shape corresponds to the adherend. Here, if the mass of the portion at the tip side of the convex portion 21 is defined as M and the spring constant of the portion at the bottom end of the convex portion 21 is defined as K, the natural frequency of the convex portion 21 can be described as $f \propto (K/M)^{1/2}$, indicating that the natural frequency f of the convex portion 21 is proportional to the 1/2 power of the spring constant K.

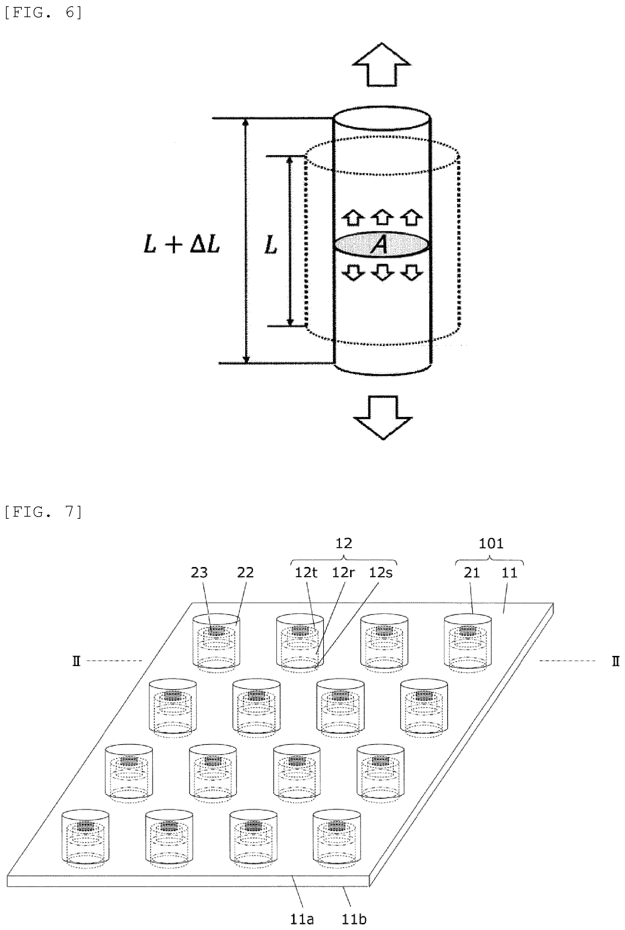

To clarify the relationship between the spring-mass model, the shape of the convex portion, and the material properties, the following is described with reference to the model shown in FIG. 6. It is assumed that the convex portion 21 is a rod-shaped spring having a shape with a constant cross-sectional area of the protrusion and no space portion, such as a column or a rectangular prism. In this case, the relationship between the load F and the elongation length L of the rod-shaped spring is expressed by the following formula. The arrows in FIG. 6 indicate the direction of resonance.

$$\Delta F = (EA\Delta L/L),$$

wherein E (MPa) represents a storage modulus,
A ($mm^2$) represents a cross-sectional area of the convex portion,
L (mm) represents a height of the resin spring portion, and
$\Delta L$ (mm) represents an elongation length when the load F is applied.

In the above formula, the spring constant K is expressed as K = EA/L based on a relationship of $\Delta F/\Delta L = K$.

Therefore, it can be seen that the spring constant K is proportional to the cross-sectional area A of the convex portion 21. Since the natural frequency f of the convex portion 21 is proportional to the 1/2 power of the spring constant K as described above, it can be seen that the natural frequency f of the convex portion 21 is proportional to the 1/2 power of the cross-sectional area A of the convex portion 21. When the convex portion 21 has a space portion 12, the cross-sectional area A of the convex portion 21 becomes smaller according to the ratio of the area of the space portion 12, and thus the natural frequency f of the convex portion 21 is lowered. As a result, the presence of the space portion 12 allows the natural frequency of the convex portion 21 to be lowered.

It can also be seen that that the spring constant K is inversely proportional to the height L of the resin spring portion based on the relationship of K = EA/L. In other words, to lower the frequency by adjusting the external shape of the convex portion, it is necessary to increase the height of the convex portion 21. However, since the frequency can be lowered by providing a space portion 12 as described above, it is not necessary to change the height of the convex portion 21, which allows the height thereof to be lowered.

The ratio of the area of the space portion 12 to the area of the sheet portion 11 or the convex portion 21 is not particularly limited as long as it satisfies the scope of the present embodiment. The ratio of the area of the space portion 12 can be appropriately adjusted such that the natural frequency of the convex portion 21 coincides with a desired sound insulation frequency range. When the ratio of the area of the space portion 12 is large, the natural frequency of the convex portion 21 tends to shift significantly toward the low-frequency side, but the strength of the convex portion 21 is reduced as the ratio of the area of the convex forming portion 22 decreases. In contrast, when the ratio of the area of the space portion 12 is small, the strength of the convex portion 21 can be increased as the ratio of the area of the convex forming portion 22 increases, but the shift of the natural frequency of the convex portion 21 toward the low-frequency side tends to be small.

The ratio of the maximum cross-sectional area of the space portion 12 to the horizontal cross-sectional area of the convex portion 21 is preferably 20% or more, more preferably 30% or more, and even more preferably 40% or more, from the viewpoint of sound insulation performance. In addition, the ratio is preferably 90% or less, more preferably 85% or less, and even more preferably 80% or less, from the viewpoint of mechanical strength and handling properties.

The ratio of the volume of the space portion 12 to the volume of the convex portion 21 is preferably 10% or more, more preferably 20% or more, and even more preferably 30% or more; and preferably 80% or less, more preferably 75% or less, and even more preferably 70% or less, from the viewpoint of sound insulation performance.

In addition, the ratio of the volume of the space portion 12 to the volume of the composite region, which is the region combining each convex portion and the region of the sheet portion where the convex portion is provided in the sheet portion 11, is preferably 10% or more, more preferably 20% or more, and even more preferably 30% or more; and preferably 80% or less, more preferably 75% or less, and even more preferably 70% or less, from the viewpoint of sound insulation performance.

[Convex Forming Portion]

At least one convex forming portion 22 is provided in contact on the sheet surface 11a of the sheet portion 11, and is provided around the space portion 12 to form a convex shape. The external shape and external parameters of the convex forming portion 22 are the same as those of the convex portion 21 as described above.

The material of the convex forming portion 22 (convex portion 21) is not particularly limited as long as it satisfies the above required characteristics, and may be the same as or different from the material of the sheet portion, or can be selected independently. Examples thereof include at least one selected from the group consisting of thermosetting elastomers, photocurable elastomers, thermoplastic elastomers, thermosetting resins, photocurable resins, and thermoplastic resins.

Among these, thermosetting elastomers, photocurable elastomers, and thermoplastic elastomers are preferred from the viewpoint of imparting rubber elasticity, and examples of the types include those exemplified for the sheet portion 11 described above.

Examples of the thermosetting resins or the photocurable resins include acrylic thermosetting resins, urethane-based thermosetting resins, silicone-based thermosetting resins, and epoxy-based thermosetting resins. Examples of the thermoplastic resins include polyolefin-based thermoplastic resins, polyester-based thermoplastic resins, acrylic thermoplastic resins, urethane-based thermoplastic resins, and polycarbonate-based thermoplastic resins.

Specific examples of the resins include, but are not particularly limited to, polymers such as polyacrylonitrile, polyethylene terephthalate, polybutylene terephthalate, polyvinyl chloride, polychlorotrifluoroethylene, polyethylene, polypropylene, polynorbornene, polyether ether ketone, polyphenylene sulfide, polyarylate, polycarbonate, polystyrene, epoxy resin, and oxazine resin.

Specific examples of the elastomers include, but are not particularly limited to, vulcanized rubber, isoprene rubber, butadiene rubber, styrene-butadiene rubber, chloroprene rubber, nitrile rubber, polyisobutylene rubber, ethylene propylene rubber, chlorosulfonated polyethylene rubber, acrylic rubber, fluororubber, epichlorohydrin rubber, polyester rubber, urethane rubber, silicone rubber, and modified products thereof, polyacrylonitrile, polyethylene terephthalate, polybutylene terephthalate, polyvinyl chloride, polychlorotrifluoroethylene, polyethylene, polypropylene, polynorbornene, polyether ether ketone, polyphenylene sulfide, polyarylate, polycarbonate, polystyrene, epoxy resin, and oxazine resin, which are chemically crosslinked natural rubber or synthetic rubber.

Among these, natural rubber, isoprene rubber, butadiene rubber, styrene-butadiene rubber, chloroprene rubber, nitrile rubber, polyisobutylene rubber, ethylene propylene rubber, chlorosulfonated polyethylene rubber, acrylic rubber, fluororubber, epichlorohydrin rubber, polyester rubber, urethane rubber, silicone rubber, and any modified product thereof are preferred; and from the viewpoint of good heat and cold resistance, silicone rubber, acrylic rubber, and any modified product thereof are more preferred.

These materials can be used singly or in combination of two or more types.

Among these, the material of the convex forming portion 22 is preferably the same material as that of the sheet portion 11 described above, and particularly preferably the elastomers. When the sheet portion 11 and the convex forming portion 22 contain the same elastomers, the sheet portion 11 and the convex forming portion 22 can be easily integrally molded, which dramatically improves productivity. That is, one particularly preferred embodiment is that the sheet portion 11 and the convex portion 21 (convex forming portion 22) form an integrally molded product, both of which contain at least one selected from the group consisting of thermosetting elastomers, photocurable elastomers, and thermoplastic elastomers.

The convex forming portion 22 may also be a two-color or multi-color molded body made of two or more types of the materials. In this case, by using the same elastomers as those of the sheet portion 11 described above for the convex forming portion 22 on the side (bottom end side) in contact with the sheet portion 11, the sheet portion 11 and the convex forming portion 22 can be easily integrally molded.

<Second Embodiment>

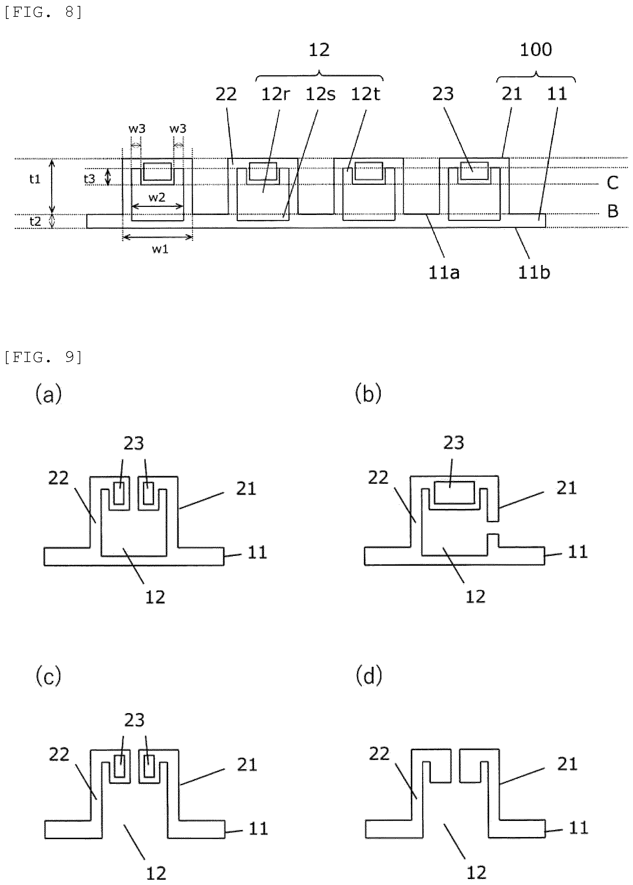

FIG. 7 shows another example of the sound insulation sheet member according to the present embodiment (second embodiment). The sound insulation sheet member 101 shown in FIG. 7 includes a sheet portion 11 having rubber elasticity, and at least one convex portion 21 having rubber elasticity provided on one surface of the sheet portion 11, wherein the at least one convex portion 21 has a space portion 12 and further has a weight portion on the tip side. FIG. 8 shows a cross-sectional view of the II-II line in FIG. 7.

In the present embodiment, the configuration is the same as that of the sound insulation sheet member 100 according to the first embodiment described above, except that the weight portion 23 is provided at the tip side of the convex portion 21, and therefore repeated descriptions are omitted here.

[Weight Portion]

The weight portion 23 is not particularly limited as long as it has a density higher than that of the convex forming portion 22 described above. The weight portion 23 in the sound insulation sheet member 100 shown in FIG. 7 is formed in a substantially columnar shape having a maximum diameter smaller than that of the convex forming portion 22, and is embedded in the convex forming portion 22 at the tip side of the convex portion 21. Since the configuration is adopted in which the weight portion 23 acting as a weight of a resonator is supported by the convex forming portion 22 that determines the spring constant, the natural frequency of the convex portion 21 can be controlled by adjusting the spring constant such as changing the shape or material (elastic modulus or mass) of the convex forming portion 22, or by changing the mass of the weight portion 23. In general, as the elastic modulus of the convex forming portion 22 decreases, the natural frequency of the convex portion 21 tends to shift toward the low-frequency side. In addition, as the mass of the weight portion 23 increases, the natural frequency of the convex portion 21 tends to shift toward the low-frequency side.

The shape of the weight portion 23 is not particularly limited, and it is preferably a plate shape from the viewpoints of adjusting the sound insulation performance and reducing the thickness. The plate shape of the weight portion 23 allows the center of gravity of the weight portion 23 to be positioned away from the sheet portion 11 compared to the case where the weight portion 23 is a sphere or the like, which tends to increase the vibration moment of the convex portion 21. For example, if the vibration moment of the convex portion 21 is kept constant, the plate-shaped weight portion 23 can be thinner compared to the case where the weight portion 23 is a sphere or the like. On the other hand, if the height of the weight portion 23 is kept constant, the plate-shaped weight portion 23 can achieve a larger vibration moment compared to the case where the weight portion 23 is a sphere or the like.

The weight portion 23 may have a through-hole, and examples of the shape include a donut shape, a washer shape, and a nut shape.

The material constituting the weight portion 23 may be appropriately selected in consideration of mass, cost, and the like, and the type of material is not particularly limited. From the viewpoints of reducing the size of the sound insulation sheet member 101 and improving the sound insulation performance, the material constituting the weight portion 23 is preferably a material having a high specific gravity.

Specific examples of the material constituting the weight portion 23 include, but are not particularly limited to, metals or alloys such as aluminum, stainless steel, iron, tungsten, gold, silver, copper, lead, zinc, and brass; inorganic glasses such as soda glass, quartz glass, and lead glass; and composites containing powder of these metals or alloys, or these inorganic glasses in the resin material of the convex forming portion 22 described above. The material, mass, and specific gravity of the weight portion 23 may be determined such that the natural frequency of the convex portion 21 coincides with a desired sound insulation frequency range.

Among these, at least one selected from the group consisting of metals, alloys, and inorganic glasses is preferred from the viewpoints of low cost, high specific gravity, and the like. The specific gravity refers to the ratio of the mass of a material to the mass of the same volume of pure water at 4°C under a pressure of 1,013.25 hPa, and as used herein, the value measured according to JIS K 0061 "Test methods for density and relative density of chemical products" is used.

The surface of the weight portion 23 may be subjected to a surface treatment in order to improve process suitability and member strength.

Examples of the method of the surface treatment include, but are not particularly limited to, a chemical treatment using a solvent or the like to improve adhesion to the convex forming portion 22, and a physical treatment of providing an unevenness on the surface to increase the member strength.

The volume ratio of the weight portion 23 in the convex portion 21 is, from the viewpoint of improving sound insulation performance, generally 1% by volume or more, preferably 5% by volume or more, more preferably 10% by volume or more, and even more preferably 20% by volume or more; and is generally 90% by volume or less, preferably 80% by volume or less, more preferably 70% by volume or less, and even more preferably 50% by volume or less, relative to 100% by volume of the convex portion.

The weight portion 23 is embedded in the convex forming portion 22 at the tip side of the convex portion 21 shown in FIG. 7, but the installation position thereof is not particularly limited thereto. Although it depends on the shape, mass, elastic modulus, and the like of the convex forming portion 22 and the weight portion 23, it is preferred that the convex forming portion 22 and the weight portion 23 are positioned such that the center of gravity (center of mass) of the convex portion 21 is located at least toward the tip side from the center of the convex portion 21 in the height direction, from the viewpoints of reducing the thickness and weight of the sound insulation sheet 101 and improving the sound insulation performance. Typically, the weight portion 23 may be offset-positioned to the tip side from the center of the convex portion 21 in the height direction.

The weight portion 23 may be completely embedded in the convex forming portion 22 (convex portion 21), may be at least partially embedded, or may be provided on the convex forming portion 22 without being embedded in the convex forming portion 22. From the viewpoint of preventing the weight portion from falling off, it is preferred that the weight portion 23 is at least partially embedded in the convex forming portion 22 (convex portion 21), and it is more preferred that the weight portion 23 is completely embedded therein.

The shapes and heights of a plurality of weight portions 23 included in the sound insulation sheet member may be the same or different.

When the convex portion 21 has a weight portion 23, the space portion 12t, which is a slit portion, can be formed, for example, in a circumferential shape around the weight portion 23 so as to surround the weight portion 23. With this configuration, the trampoline vibration can be effectively generated.

In the sound insulation sheet member according to the second embodiment, when the convex portion 21 has a space portion 12, a part of the space portion 12 may be provided so as to reach at least either the tip or the side surface of the convex portion 21, as shown in FIGS. 9 (a) and 9 (b). This configuration is advantageous because the influence of the internal air on the resonance of the convex portion 21 is reduced compared to the case where the internal air is sealed.

As shown in FIGS. 9 (c) and 9 (d), the convex portion 21 may have through-holes on both the tip side and the sheet side.

The spring-mass model represented by a resonator using the spring portion as a unit described above is a model of the longitudinal extension and contraction vibration mode, and the following describes a model of a trampoline vibration mode.

When the shape of the convex portion 21 having a space portion 12 satisfies certain conditions, the natural frequency of the convex portion 21 can be further lowered or the height of the convex portion 21 can be further reduced by "trampoline vibration", which is the preferred vibration mode. Specifically, by providing a space portion 12t, the trampoline vibration mode becomes more likely to occur, so that the natural frequency of the convex portion 21 can be lowered or the height of the convex portion 21 can be reduced.

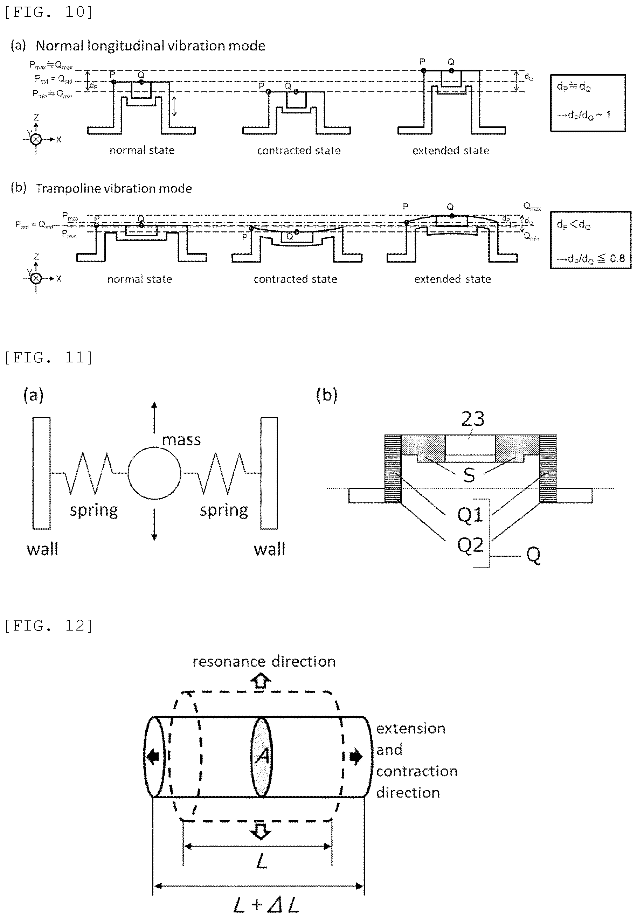

The longitudinal extension and contraction vibration mode as used herein refers to a mode in which an outer circumference portion P of the tip of the convex portion 21 and a center portion Q of the tip of the convex portion 21 vibrate up and down to the same extent, as shown in FIG. 10 (a).

The trampoline vibration mode as used herein refers to a mode in which a center portion Q of the tip of the convex portion 21 vibrates more up and down compared to an outer circumference portion P of the tip side of the convex portion 21, as shown in FIG. 10 (b).

As used herein, when the vibration mode satisfies $d_P/d_Q \leq 0.8$, preferably $d_P/d_Q \leq 0.5$, wherein $d_P$ represents a Z-component of a displacement field at the outer circumference portion P of the tip of the convex portion 21, and $d_Q$ represents a Z-component of a displacement field at the center portion Q of the tip of the convex portion 21, the vibration mode is defined as a trampoline vibration mode as shown in FIG. 10. The plane on which the sheet portion spreads is defined as the XY plane, and the direction perpendicular to the plane on which the sheet portion spreads is defined as the Z-axis direction.

The Z-components of the displacement field $d_P$ and $d_Q$ were determined by calculating the natural vibration mode of the structure using COMSOL Multiphysics (manufactured by COMSOL, Inc.), which is a finite element physical simulation software. The conditions for the physical simulation are described in detail in the description of <Experiment 3> below.

When the trampoline vibration occurs, the natural frequency can be lowered at the same height of the convex portion 21, and the height of the convex portion 21 can be lowered (reduced in height) at the same natural frequency, compared to the case when the longitudinal extension and contraction vibration occurs. The effects of the action are similar to those described above and are detailed below.

The present feature can be described using a spring-mass model in which the convex portion 21 is expressed as a resonator having a spring portion as a unit, as shown in FIG. 11 (a). The arrows in FIG. 11 (a) indicate the direction of resonance. In FIGS. 11 (a) and (b), when the convex portion 21 has a weight portion 23, the portion (mass) indicated by a circle corresponds to the weight portion 23 at the tip side beyond the space portion 12 of the convex portion 21; the portions indicated by springs correspond to the portions S (spring portions S) of the convex forming portion 22 at the tip side beyond the space portion 12 of the convex portion 21, which do not overlap with the weight portion 23 but overlap with the space portion 12 when the sound insulation sheet member is viewed in plan; and the portions indicated by rectangular shapes (walls) correspond to the portions Q (rectangular portions Q), each of which is composed of the portion Q1 of the convex forming portion 22 that does not overlap with the space portion 12 and the portion Q2 of the sheet portion 11 that overlaps with the portion Q1 when the sound insulation sheet member is viewed in plan.

Here, if the mass of the weight portion 23 at the tip side beyond the space portion 12 of the convex portion 21 is defined as M and the spring constant of the spring portion S is defined as K, the natural frequency of the convex portion 21 can be described as $f \propto (K/M)^{1/2}$, indicating that the natural frequency f of the convex portion 21 is proportional to the 1/2 power of the spring constant K.

To clarify the relationship between the spring-mass model, the shape of the convex portion, and the material properties, the following is described with reference to the model shown in FIG. 12. It is assumed that the shape of the portion composed of the convex forming portion at the tip side beyond the space portion 12 of the convex portion 21 and the weight portion 23 is a shape having no space portion, such as a column or a rectangular prism, and is a rod-shaped spring having a shape with a constant cross-sectional area of the cross-section of the convex forming portion in the planar direction of the sheet portion. In this case, the relationship between the load F on the rod-shaped spring and the height (elongation length) L of the spring portion is expressed by the following formula. The white arrows in FIG. 12 indicate the direction of resonance, and the black arrows indicate the direction of extension and contraction.

$$\Delta F = (EA\Delta L/L),$$

wherein E (MPa) represents a storage modulus of the spring portion S,
A ($mm^2$) represents a cross-sectional area of the cross-section perpendicular to the direction of extension and contraction of the portion composed of the weight portion 23 at the tip side beyond the space portion 12 of the convex portion 21 and the convex forming portion 22 at the tip side beyond the space portion 12 of the convex portion 21,
L (mm) represents a length of the spring portion S in the direction of extension and contraction, and
$\Delta L$ (mm) represents an elongation length of the spring portion S in the direction of extension and contraction when the load F is applied.

In the above formula, the spring constant K is expressed as K = EA/L based on a relationship of $\Delta F/\Delta L = K$. By providing a space portion (slit) 12t, the cross-sectional area A in the above formula is reduced, and the spring constant K is lowered, which allows the natural frequency f of the convex portion 21 to be lowered. It can also be seen from the above formula that the spring constant K is inversely proportional to the length L of the spring portion S in the direction of extension and contraction. When the diameter of the cross-section of the convex portion 21 in the planar direction of the sheet portion increases, the length L of the spring portion S in the direction of extension and contraction increases, thereby allowing the natural frequency f of the convex portion 21 to be lowered.

This tendency in the trampoline vibration mode is opposite to that in the model of the longitudinal extension and contraction vibration mode described above. In the model of the longitudinal extension and contraction vibration mode, when the diameter of the cross-section of the convex portion 21 in the planar direction of the sheet portion increases, the cross-sectional area A of the convex portion 21 increases, which increases K according to the relationship of K = EA/L, and the natural frequency f of the convex portion 21 shifts to the higher frequency side.

In the longitudinal extension and contraction vibration mode, in order to achieve a lower frequency by changing the external shape of the convex portion 21, it is necessary to increase the height of the convex portion 21, whereas in the trampoline vibration mode, the frequency can be lowered by increasing the diameter of the cross-section of the convex portion 21 in the planar direction of the sheet portion without changing the height of the convex portion 21. As a result, the same frequency can be achieved even when the height of the convex portion 21 is lower than that in the longitudinal extension and contraction vibration mode, thereby allowing the height of the convex portion 21 to be reduced.

The structure of the convex portion 21 in which the trampoline vibration mode ($d_P/d_Q \leq 0.8$) is likely to occur is a structure that satisfies the following condition (1) or (2), and more likely is a structure that satisfies both the following conditions (1) and (2).

(1) A ratio ($D_P/D_W$) of an equivalent diameter $D_P$ of the convex portion, as represented by the following formula, to an equivalent diameter $D_W$ of the weight portion, as represented by the following formula, is 1.2 or more.

(2) A ratio ($H/D_P$) of a height H of the composite region (total value of a height of the convex portion in the direction perpendicular to the planar direction of the sheet portion and a thickness of the sheet portion) to an equivalent diameter $D_P$ of the convex portion, as represented by the following formula, is 3.0 or less (preferably 0.91 or less).

$$D_P = 4A_P/p_P,$$

and

$$D_W = 4A_W/p_W,$$

wherein $D_P$ represents an equivalent diameter of the convex portion,
$D_W$ represents an equivalent diameter of the weight portion,
$A_P$ represents an area of a region formed by the outer circumference of the cross-section of the convex portion in the planar direction of the sheet portion,
$A_W$ represents an area of a region formed by the outer circumference of the cross-section of the weight portion in the planar direction of the sheet portion,
$p_P$ represents a length of the outer circumference of the cross-section of the convex portion in the planar direction of the sheet portion, and
$p_W$ represents a length of the outer circumference of the cross-section of the weight portion in the planar direction of the sheet portion.

If the outer diameter of the convex portion 21 is the value close to the outer diameter of the weight portion 23, only the weight portion 23 arranged at the tip side of the convex portion 21 cannot vibrate, which is not the trampoline vibration mode. Also, if the height of the convex portion 21 becomes larger relative to the outer diameter of the convex portion 21, only the weight portion 23 arranged at the tip side of the convex portion 21 cannot vibrate, which is not the trampoline vibration mode.

[Sound Insulation Structure]

The sound insulation structure according to another embodiment of the present invention (also simply referred to as "sound insulation structure") is a sound insulation structure including at least the sound insulation sheet member according to each of the embodiments described above and a support that supports the sound insulation sheet member.

The sound insulation sheet member described above can be provided as appropriate for the environment where the sound insulation performance is exerted. For example, the sound insulation sheet member may be provided directly on a device, structure, or the like. An adhesive layer or the like may be provided between the sound insulation sheet member and a device, structure, or the like. Alternatively, as in the present embodiment, the sound insulation sheet member may be used together with a support that supports the sound insulation sheet member to form a sound insulation structure. The support only needs to support the sound insulation sheet member when the sound insulation sheet member is used for sound insulation, and does not need to support the sound insulation sheet member during production, storage, or the like.

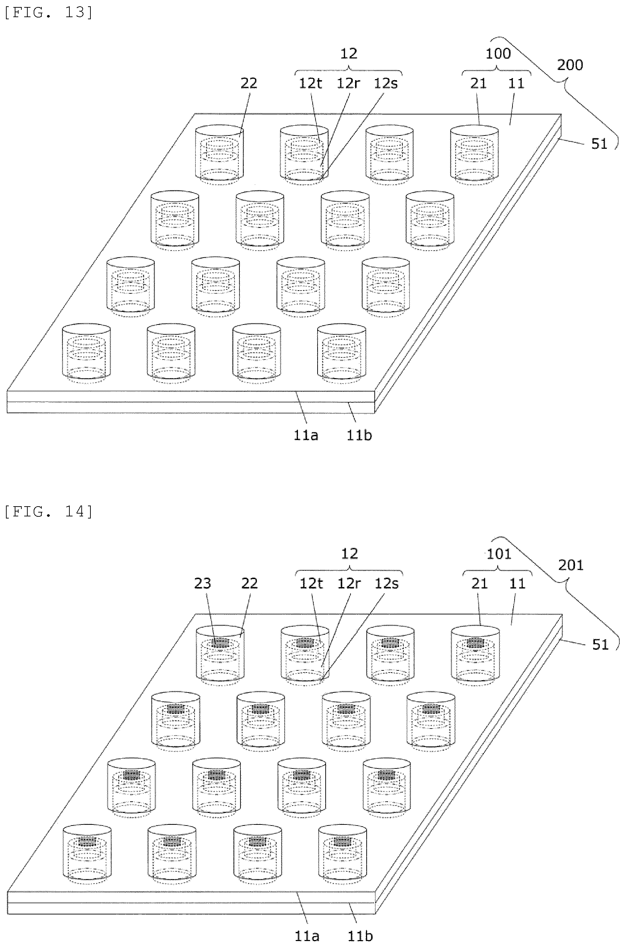

FIGS. 13 and 14 show examples of the sound insulation structure. FIG. 13 shows a sound insulation structure 200 including the sound insulation sheet member 100 according to the first embodiment described above and a support 51 that supports the sound insulation sheet member 100. FIG. 14 shows a sound insulation structure 201 including the sound insulation sheet member 101 according to the second embodiment described above and a support 51 that supports the sound insulation sheet member 101.

[Support]

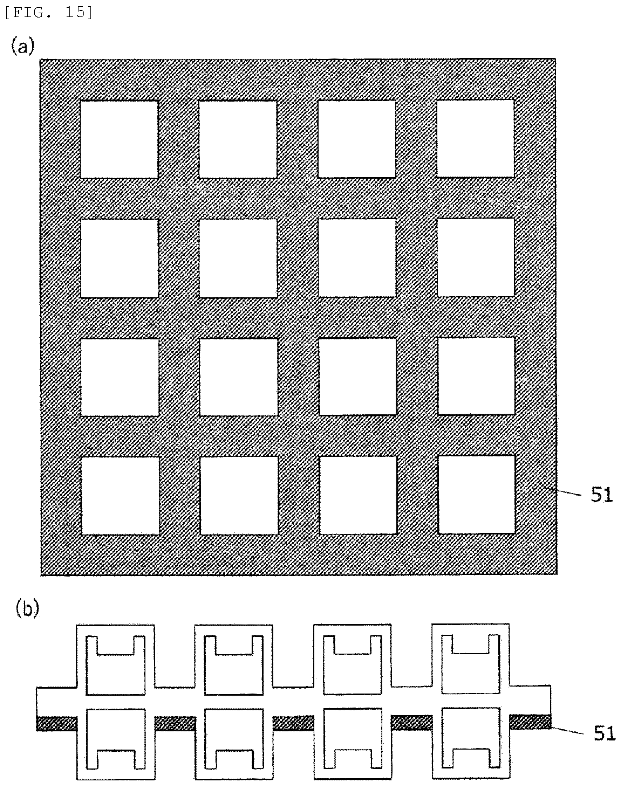

The support is not particularly limited as long as it is provided on the sound insulation sheet member, and from the viewpoints of ease of production and structural stability, it is preferred that the support is provided on a sound insulation sheet member having convex portions on only one surface of the sheet member, in contact with the surface opposite to the surface where the convex portions are provided. When the convex portions are formed on both surfaces of the sheet portion, a support having holes may be used and provided on the sheet surface where the convex portions are provided in contact, as shown in FIG. 15 (a). The support shown in FIG. 15 (a) may be provided on the side where the convex portions are provided in an embodiment where the convex portions are provided on only one surface of the sheet portion. FIG. 15 (b) shows a cross-sectional view of the sound insulation sheet member having the support shown in FIG. 15 (a).

The material constituting the support is not particularly limited as long as it is capable of supporting the sound insulation sheet member, and from the viewpoint of improving the sound insulation performance, a material that is more rigid than the material constituting the sheet or convex portion is preferred. Specifically, the support 51 preferably has a Young's modulus of 1 GPa or more, more preferably 1.5 GPa or more, and although there is no particular upper limit, it may be, for example, 1,000 GPa or less.

When the sound insulation sheet member is directly provided on a device, structure, or the like, the surface on which the sound insulation sheet member is provided preferably has a rigidity similar to that of the support, from the viewpoints of supporting the sheet and improving the sound insulation performance.

Examples of the material constituting the support include photocurable resin sheets, thermosetting resin sheets, thermoplastic resin sheets, metal plates, and alloy plates. Examples of the photocurable resin sheets, thermosetting resin sheets, and thermoplastic resin sheets include sheets using photocurable resins, thermosetting resins, and thermoplastic resins listed in the sheet portion 11 described above.

Specific examples of the material constituting the support include: organic materials such as polyester resins such as polyethylene terephthalate, polybutylene terephthalate, polyethylene naphthalate, and polybutylene succinate, poly(meth)acrylate resins such as polymethyl methacrylate, polycarbonate resins such as polycarbonate made mainly from isosorbide, polyolefin resins such as polyethylene, polypropylene, and polynorbornene, vinyl chloride resins, polyacrylonitrile, polyvinylidene chloride, polyethersulfone, polyphenylene sulfide, polyarylate, polyamide, polyimide, triacetyl cellulose, polystyrene, epoxy resins, and oxazine resins; and composite materials containing metals such as aluminum, stainless steel, iron, copper, zinc, and brass, inorganic glass, or inorganic particles or fibers in these organic materials.

Among these, the support is preferably at least one selected from the group consisting of photocurable resin sheets, thermosetting resin sheets, thermoplastic resin sheets, metal plates, and alloy plates, from the viewpoints of sound insulation, rigidity, moldability, cost, and the like. The thickness of the support is not particularly limited, and is preferably 0.05 mm or more and 0.5 mm or less from the viewpoints of sound insulation performance, rigidity, moldability, weight reduction, cost, and the like.

The support may have a coating layer on the surface thereof from the viewpoints of light transmittance, adhesion to the sound insulation sheet member, and the like.

The shape of the support can be appropriately selected according to the installation surface of the sound insulation structure, and is not particularly limited. For example, it may be a flat sheet shape, a curved sheet shape, or a special shape that is processed to have curved or folded portions. In addition, cut or punched portions may be provided at any location on the support from the viewpoint of weight reduction.

The surface density (mass per unit area) of the support can also be appropriately adjusted according to the desired performance, and is not particularly limited. From the viewpoint of improving the effects of the present invention, the surface density of the support is preferably 80% or less of the surface density of the sound insulation sheet member, more preferably 30% or less, and even more preferably 10% or less; and although there is no particular upper limit, it may be, for example, 1% or more.

The sound insulation structure may be a laminate including the sound insulation sheet member according to the present embodiment. For example, the sound insulation sheet member may be provided on both surfaces of the support. Alternatively, a plurality of the sound insulation structures each having the sound insulation sheet member provided on the support may be laminated and used. By combining a plurality of the sound insulation sheet members, the frequency position and the like can be controlled.

Even if it is a laminate having the sound insulation sheet member on both surfaces of the support, it can follow non-flat surfaces including curved surfaces or the like when the housing including the support, the laminate, and the like are flexible, thereby allowing the sound insulation structure to be stably mounted.

[Applications of Sound Insulation Sheet Member and Sound Insulation Structure]

One example of applications of the sound insulation sheet member and the sound insulation structure may be to attach them to the inside or outside of small electronic devices to reduce or muffle motor noises in small electronic devices, switching noises in electronic circuits, and the like.

EXAMPLES

The present invention is more specifically described below with reference to Examples, but is in no way limited thereto. The present invention may employ various conditions within the limits of not departing from the gist of the present invention and achieving the object of the present invention.

<Experiment 1>

[Calculation of Natural Frequency]

In Examples described below, COMSOL Multiphysics (manufactured by COMSOL, Inc.), a finite element physical simulation software, was used to calculate the natural frequency of the structure. The conditions for the physical simulation are described in detail below.

The finite element method was used for the physical simulation. The finite element method is a numerical analysis technique used for approximately solving, with a high degree of accuracy, differential equations that cannot be solved analytically, and is a method of dividing a complex object to be analyzed into simple smaller parts (elements) and calculating the overall behavior approximately. The natural frequencies of protrusions in Examples described below were calculated by the following procedure.

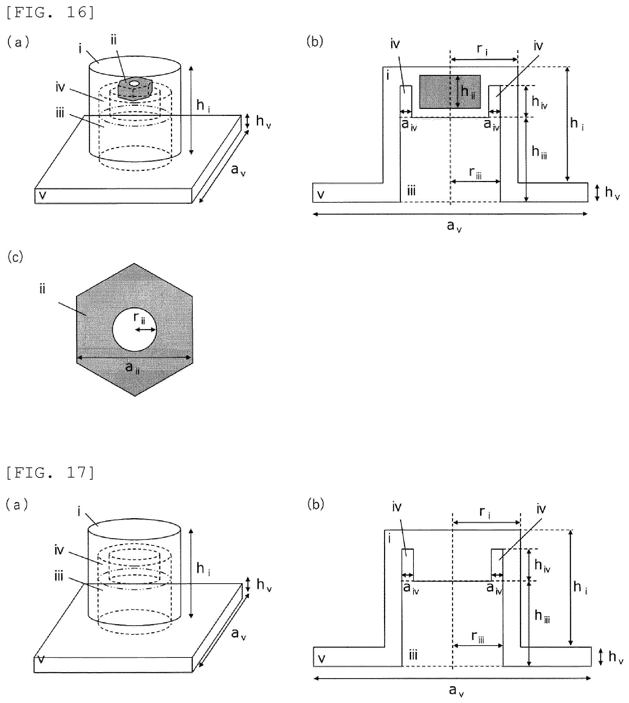

FIG. 16 shows an embodiment in which a perforated nut (hexagonal plate) is used as a weight portion. For each of the portions i to v of the sound insulation structure shown in FIG. 16, the physical properties (specific gravity, storage modulus (Young's modulus), and Poisson's ratio) listed in Table 1 and the material dimensions (r, h, a) listed in Table 1 and FIG. 16 were substituted into the equation of the solid mechanics module of COMSOL Multiphysics (manufactured by COMSOL, Inc.), and the natural vibration mode was calculated under the condition that the bottom surface of the sheet portion v was completely fixed. Because this calculation assumes an ideal state where there is no influence of an adhesive, the natural frequency is calculated under the condition that the bottom surface of the sheet portion v is completely fixed.

The ratio of the maximum cross-sectional area of the space portion (portion iii) to the horizontal cross-sectional area of the convex portion is determined as follows.

Space portion area ratio [%] = (radius of portion iii)$^2$ / (radius of portion i)$^2$

To clarify the magnitude of the shift amount of the natural frequency due to the space portion (portion iii) and the slit portion (portion iv), the standardized shift amount of the natural frequency is determined as follows.

Frequency shift amount [%] = ((natural frequency of embodiment without portions iii and iv) - (natural frequency)) / (natural frequency of embodiment without portions iii and iv)

<Embodiments Using Perforated Nut (Hexagonal Plate) as Weight Portion>

[Examples 1 to 4]

In Examples 1 to 4, unit cells including the sound insulation sheet member shown in FIG. 16 were used. The size, material, and physical properties of the constituent members of each unit cell are shown in Table 1. The natural frequency of the longitudinal extension and contraction vibration of the protrusions in each unit cell was calculated based on the above calculation method. The results are shown in Table 1.

[Comparative Examples 1 and 2]

In Comparative Examples 1 and 2, unit cells including the sound insulation sheet member shown in FIG. 16 were used. The size, material, and physical properties of the constituent members of each unit cell are shown in Table 1. The natural frequency of the longitudinal extension and contraction vibration of the protrusions in each unit cell was calculated based on the above calculation method. The results are shown in Table 1.

[Table 1]

| | Weight shape | Location | r [mm] | h [mm] | a [mm] | Material | Specific gravity [g/cm³] | Young's modulus [MPa] | Poisson's ratio | Natural frequency [Hz] | Space portion area ratio [%] | Frequency shift amount [%] |
|---|---|---|---|---|---|---|---|---|---|---|---|---|
| Example 1 | hexagonal plate | i | 8.75 | 4.5 | - | rubber | 1.05 | 1.9 | 0.49 | 525 | 64% | 77 |
| | | ii | 2 | 3.2 | 7 | iron | 7.87 | 206000 | 0.30 | | | |
| | | iii | 7 | 1.3 | - | air | - | - | - | | | |
| | | iv | - | 1.5 | 2.5 | air | - | - | - | | | |
| | | v | - | 0.5 | 20 | rubber | 1.05 | 1.9 | 0.49 | | | |
| Example 2 | hexagonal plate | i | 8.75 | 4.5 | - | rubber | 1.05 | 1.9 | 0.49 | 346 | 64% | 85 |
| | | ii | 2 | 3.2 | 7 | iron | 7.87 | 206000 | 0.30 | | | |
| | | iii | 7 | 1.3 | - | air | - | - | - | | | |
| | | iv | - | 2.8 | 2.5 | air | - | - | - | | | |
| | | v | - | 0.5 | 20 | rubber | 1.05 | 1.9 | 0.49 | | | |
| Example 3 | hexagonal plate | i | 16.25 | 9.5 | - | rubber | 1.05 | 1.9 | 0.49 | 256 | 64% | 78 |
| | | ii | 4 | 6.5 | 13 | iron | 7.87 | 206000 | 0.30 | | | |
| | | iii | 13 | 3 | - | air | - | - | - | | | |
| | | iv | - | 3 | 5 | air | - | - | - | | | |
| | | v | - | 0.5 | 34 | rubber | 1.05 | 1.9 | 0.49 | | | |
| Example 4 | hexagonal plate | i | 16.25 | 9.5 | - | rubber | 1.05 | 1.9 | 0.49 | 169 | 64% | 86 |
| | | ii | 4 | 6.5 | 13 | iron | 7.87 | 206000 | 0.30 | | | |
| | | iii | 13 | 3 | - | air | - | - | - | | | |
| | | iv | - | 5.3 | 5 | air | - | - | - | | | |
| | | v | - | 0.5 | 34 | rubber | 1.05 | 1.9 | 0.49 | | | |

(continued)

|  | Weight shape | Location | r [mm] | h [mm] | a [mm] | Material | Specific gravity [g/cm³] | Young's modulus [MPa] | Poisson's ratio | Natural frequency [Hz] | Space portion area ratio [%] | Frequency shift amount [%] |
|---|---|---|---|---|---|---|---|---|---|---|---|---|
| Comparative Example 1 | hexagonal plate | i | 8.75 | 4.5 | - | rubber | 1.05 | 1.9 | 0.49 | 699 | 64% | 70 |
|  |  | ii | 2 | 3.2 | 7 | iron | 7.87 | 206000 | 0.30 |  |  |  |
|  |  | iii | 7 | 1.3 | - | air | - | - | - |  |  |  |
|  |  | iv | - | - | - | - | - | - | - |  |  |  |
|  |  | v | - | 0.5 | 20 | rubber | 1.05 | 1.9 | 0.49 |  |  |  |
| Comparative Example 2 | hexagonal plate | i | 16.25 | 9.5 | - | rubber | 1.05 | 1.9 | 0.49 | 355 | 64% | 70 |
|  |  | ii | 4 | 6.5 | 13 | iron | 7.87 | 206000 | 0.30 |  |  |  |
|  |  | iii | 13 | 3 | - | air | - | - | - |  |  |  |
|  |  | iv | - | - | - | - | - | - | - |  |  |  |
|  |  | v | - | 0.5 | 34 | rubber | 1.05 | 1.9 | 0.49 |  |  |  |

The groups [Examples 1 and 2, and Comparative Example 1] and [Examples 3 and 4, and Comparative Example 2] each have the same external shapes of the unit cells, and are grouped for a comparison between the presence and absence of the portion iv. Although the dimensions of the convex portions were the same, the natural frequency was 525 Hz in Example 1, 346 Hz in Example 2, and 699 Hz in Comparative Example 1, indicating that the natural frequency was significantly lowered by the portion iv. Similarly, the natural frequency was 256 Hz in Example 3, 169 Hz in Example 4, and 355 Hz in Comparative Example 2, indicating that the natural frequency was significantly lowered by the portion iv.

<Embodiments Without Weight Portion>

[Examples 5 to 8]

In Examples 5 to 8, unit cells including the sound insulation sheet member shown in FIG. 17 were used. The size, material, and physical properties of the constituent members of each unit cell are shown in Table 2. The natural frequency of the longitudinal extension and contraction vibration of the protrusions in each unit cell was calculated based on the above calculation method. The results are shown in Table 2.

[Comparative Examples 3 and 4]

In Comparative Examples 3 and 4, unit cells including the sound insulation sheet member shown in FIG. 17 were used. The size, material, and physical properties of the constituent members of each unit cell are shown in Table 2. The natural frequency of the longitudinal extension and contraction vibration of the protrusions in each unit cell was calculated based on the above calculation method. The results are shown in Table 2.

The groups [Examples 5 and 6, and Comparative Example 3] and [Examples 7 and 8, and Comparative Example 4] each have the same external shapes of the unit cells, and are grouped for a comparison between the presence and absence of the portion iv. Even though the dimensions of the convex portions were the same, the natural frequency was 811 Hz in Example 5, 621 Hz in Example 6, and 997 Hz in Comparative Example 3, indicating that the natural frequency was significantly lowered by the portion iv. Similarly, the natural frequency was 404 Hz in Example 7, 314 Hz in Example 8, and 498 Hz in Comparative Example 4, indicating that the natural frequency was significantly lowered by the portion iv.

[Table 2]

| | Weight shape | Location | r [mm] | h [mm] | a [mm] | Material | Specific gravity [g/cm³] | Young's modulus [MPa] | Poisson's ratio | Natural frequency [Hz] | Space portion area ratio [%] | Frequency shift amount [%] |
|---|---|---|---|---|---|---|---|---|---|---|---|---|
| Example 5 | n/a | i | 8.75 | 4.5 | - | rubber | 1.05 | 1.9 | 0.49 | 811 | 64% | 59 |
| | | ii | - | - | - | - | - | - | - | | | |
| | | iii | 7 | 1.3 | - | air | - | - | - | | | |
| | | iv | - | 1.5 | 2.5 | air | - | - | - | | | |
| | | v | - | 0.5 | 20 | rubber | 1.05 | 1.9 | 0.49 | | | |
| Example 6 | n/a | i | 8.75 | 4.5 | - | rubber | 1.05 | 1.9 | 0.49 | 621 | 64% | 68 |
| | | ii | - | - | - | - | - | - | - | | | |
| | | iii | 7 | 1.3 | - | air | - | - | - | | | |
| | | iv | - | 2.8 | 2.5 | air | - | - | - | | | |
| | | v | - | 0.5 | 20 | rubber | 1.05 | 1.9 | 0.49 | | | |
| Example 7 | n/a | i | 16.25 | 9.5 | - | rubber | 1.05 | 1.9 | 0.49 | 404 | 64% | 59 |
| | | ii | - | - | - | - | - | - | - | | | |
| | | iii | 13 | 3 | - | air | - | - | - | | | |
| | | iv | - | 3 | 5 | air | - | - | - | | | |
| | | v | - | 0.5 | 34 | rubber | 1.05 | 1.9 | 0.49 | | | |
| Example 8 | n/a | i | 16.25 | 9.5 | - | rubber | 1.05 | 1.9 | 0.49 | 314 | 64% | 68 |
| | | ii | - | - | - | - | - | - | - | | | |
| | | iii | 13 | 3 | - | air | - | - | - | | | |
| | | iv | - | 5.3 | 5 | air | - | - | - | | | |
| | | v | - | 0.5 | 34 | rubber | 1.05 | 1.9 | 0.49 | | | |

| | Weight shape | Location | r [mm] | h [mm] | a [mm] | Material | Specific gravity [g/cm$^3$] | Young's modulus [MPa] | Poisson's ratio | Natural frequency [Hz] | Space portion area ratio [%] | Frequency shift amount [%] |
|---|---|---|---|---|---|---|---|---|---|---|---|---|
| Comparative Example 3 | n/a | i | 8.75 | 4.5 | - | rubber | 1.05 | 1.9 | 0.49 | 997 | 64% | 49 |
| | | ii | - | - | - | - | - | - | - | | | |
| | | iii | 7 | 1.3 | - | air | - | - | - | | | |
| | | iv | - | - | - | - | - | - | - | | | |
| | | v | - | 0.5 | 20 | rubber | 1.05 | 1.9 | 0.49 | | | |
| Comparative Example 4 | n/a | i | 16.25 | 9.5 | - | rubber | 1.05 | 1.9 | 0.49 | 498 | 64% | 50 |
| | | ii | - | - | - | - | - | - | - | | | |
| | | iii | 13 | 3 | - | air | - | - | - | | | |
| | | iv | - | - | - | - | - | - | - | | | |
| | | v | - | 0.5 | 34 | rubber | 1.05 | 1.9 | 0.49 | | | |

<Experiment 2>

Sound insulation sheets made of silicone were produced under the molding conditions in Examples 1' to 4' and Comparative Examples 1' and 2'.

The silicone used was KE-941-U (manufactured by Shin-Etsu Chemical Co., Ltd.), and a nut (made of stainless steel) was used as a weight portion; and the sound insulation sheets in Examples 1' to 4' and Comparative Examples 1' and 2' were produced in A6 size according to the dimensions of each convex portion shown in Table 1.

The production was carried out by the following steps (1) to (4):

(1) a step of preparing a mold having a plurality of cavities and arranging weights in the plurality of cavities provided in the mold,
(2) a step of pouring a resin material into the cavities,
(3) a step of curing the poured resin material (curing temperature of 165°C and heating time of 12 minutes), and
(4) a step of releasing the resulting cured product from the mold to obtain a sound insulation sheet member.

The Young's modulus of each produced silicone rubber was measured using a dynamic viscoelasticity apparatus DMS6100, and was 7.2 MPa at 25°C and 10 Hz.

(Examples 1' to 4' and Comparative Examples 1' and 2')

[Protrusion Vibration Experiment]

The silicone sound insulation sheets produced were subjected to a vibration experiment on the protrusions.

One protrusion was cut out from each sound insulation sheet, and the cut-out protrusion was bonded to a columnar base (dimensions of φ30 mm, thickness of 10 mm, and material of A5250) using an adhesive of D434-EL (manufactured by Toagosei Co., Ltd.) to prepare a measurement sample.

The prepared measurement sample was vibrated using a small vibrator of K2007E01 (manufactured by The Modal Shop Inc.), and the signals of the force and velocity applied to the base were analyzed using an FFT analyzer of OR34 (manufactured by OROS SA).

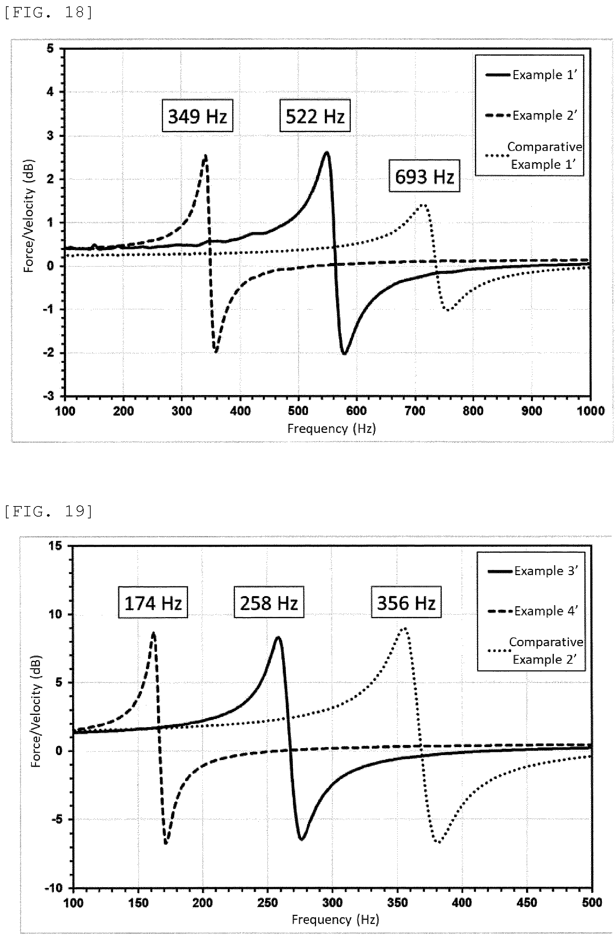

The vibration conditions were such that the base was subjected to a sweep vibration from 10 to 1,000 Hz using a sine signal, and the signals of the force and velocity described above were obtained. The analysis conditions were FFT with a frequency resolution of 1.25 Hz and force divided by velocity to calculate impedance (dB). The impedance of the measurement sample alone was obtained by subtracting the impedance of the base alone from the impedance of the base and the measurement sample. The measurement results are shown in FIGS. 18 and 19, and the frequency at which the impedance of each measurement sample was maximum is shown in FIGS.

FIG. 18 shows the measurement results of Examples 1' and 2' and Comparative Example 1', in which the external shapes are the same and a comparison is made between the presence and absence of the space portion. Even though the dimensions of the convex portions were the same, the frequency at which the impedance was maximum, i.e., the natural frequency was 522 Hz in Example 1', 349 Hz in Example 2', and 693 Hz in Comparative Example 1', indicating that the natural frequency was lowered as in the simulation results.

FIG. 19 shows the measurement results of Examples 3' and 4' and Comparative Example 2', in which the external shapes are the same and a comparison is made between the presence and absence of a space portion. Even though the dimensions of the convex portions were the same, the frequency at which the impedance was maximum, i.e., the natural frequency was 258 Hz in Example 3', 174 Hz in Example 4', and 356 Hz in Comparative Example 2', indicating that the natural frequency was lowered as in the simulation results.

Based on the above results, it was confirmed that the natural frequencies of the convex portions were lowered in the actual measurements as in the simulations.

<Experiment 3>

<Study of Trampoline Vibration>

In Examples A-1 to A-6 and Comparative Examples B-1 to B-3, unit cells including the sound insulation sheet member shown in FIG. 16 were used. The size, material, and physical properties of the constituent members of each unit cell are shown in Tables 3 and 4. Table 4 shows the size, material, and physical properties of common constituent members in Examples A-1 to A-6, and Comparative Examples B-1 to B-3. The natural frequency (resonance frequency) of the longitudinal extension and contraction vibration or trampoline vibration of the protrusions in each unit cell, and the ratio $d_P/d_Q$ of the Z-component $d_P$ of the displacement field at the outer circumference P of the tip of the convex portion 21 to the Z-component $d_Q$ of the displacement field at the center portion Q of the tip of the convex portion 21 were calculated using the COMSOL Multiphysics (manufactured by COMSOL, Inc.). The results are shown in Table 3. The conditions of the physical simulation are described in detail below.

The finite element method was used for the physical simulation as in Experiment 1. For each of the portions i to v of the sound insulation structure shown in FIG. 16, the physical properties (specific gravity, storage modulus (Young's modulus), and Poisson's ratio) listed in Table 4 and the material dimensions (r, h, a) listed in Tables 3 and 4 and FIG. 16 were substituted into the equation of the solid mechanics module of COMSOL Multiphysics (manufactured by COMSOL, Inc.), and the natural vibration mode was calculated under the condition that the bottom surface of the sheet portion v was completely fixed. FIG. 16 shows an embodiment in which a perforated nut (hexagonal plate) is used as a weight portion. Because this calculation assumes an ideal state where there is no influence of an adhesive, the natural frequency is calculated under the condition that the bottom surface of the sheet portion v is completely fixed.

In Table 3, the "displacement field Z-component ratio $d_P/d_Q$" represents the ratio of the Z-component $d_P$ of the displacement field at the outer circumference P of the tip of the convex portion 21 to the Z-component $d_Q$ of the displacement field at the center portion Q of the tip of the convex portion 21. The closer the value of $d_P/d_Q$ is to 1, the more the outer circumference P of the tip of the convex portion 21 and the center portion Q of the tip of the convex portion 21 vibrate to the same extent, indicating that the property of the longitudinal extension and contraction vibration mode is strong. The closer the value of $d_P/d_Q$ is to 0, the more the center portion Q of the tip of the convex portion 21 vibrates than the outer circumference P of the tip of the convex portion 21, indicating that the property of the trampoline vibration mode is strong.

[Table 3]

| | Weight shape | Convex portion radius $r_i$ [mm] | Convex portion height $h_i$ [mm] | Space portion radius $r_{iii}$ [mm] | Space portion height $h_{iii}$ [mm] | Slit portion width $a_{iv}$ [mm] | Slit portion height $h_{iv}$ [mm] | Inner space area ratio [%] | Sheet portion length $a_v$ | Displacement field Z-component ratio $d_P/d_Q$ | Composite region height $H=h_i+h_v$ [mm] | Convex portion equivalent diameter/ weight portion equivalent diameter $D_p/D_w$ | Composite region height / convex portion equivalent diameter $H/D_P$ | Vibration mode | Natural frequency [Hz] | Frequency shift amount [%] |
|---|---|---|---|---|---|---|---|---|---|---|---|---|---|---|---|---|
| Example A-1 | hexagonal plate | 5.0 | 4.5 | 4.5 | 1.3 | 0.0 | 0.0 | 81 | 12 | 0.88 | 5.0 | 1.24 | 0.50 | longitudinal extension and contraction | 757 | 67 |
| Example A-2 | | 5.0 | 4.5 | 4.5 | 1.3 | 0.3 | 1.5 | 81 | 12 | 0.83 | 5.0 | 1.24 | 0.50 | longitudinal extension and contraction | 580 | 75 |
| Example A-3 | | 5.0 | 4.5 | 4.5 | 1.3 | 0.3 | 2.8 | 81 | 12 | 0.55 | 5.0 | 1.24 | 0.50 | trampoline | 410 | 82 |
| Example A-4 | | 5.0 | 4.5 | 4.5 | 1.3 | 0.3 | 3.3 | 81 | 12 | 0.23 | 5.0 | 1.24 | 0.50 | trampoline | 316 | 86 |
| Example A-5 | | 5.0 | 10.2 | 4.5 | 7.0 | 0.0 | 0.0 | 81 | 12 | 0.97 | 10.7 | 1.24 | 1.07 | longitudinal extension and contraction | 316 | 57 |
| Example A-6 | | 5.0 | 24.5 | 4.5 | 21.3 | 0.3 | 3.3 | 81 | 12 | 0.80 | 25 | 1.24 | 2.50 | trampoline | 161 | 53 |
| Comparative Example B-1 | | 5.0 | 4.5 | 0.0 | 0.0 | 0.0 | 0.0 | - | 12 | 0.99 | 5.0 | 1.24 | 0.50 | longitudinal extension and contraction | 2314 | - |
| Comparative Example B-2 | | 5.0 | 10.2 | 0.0 | 0.0 | 0.0 | 0.0 | - | 12 | 0.97 | 10.7 | 1.24 | 1.07 | longitudinal extension and con-traction | 730 | - |

EP 4 600 946 A1

25

| | Weight shape | Convex portion radius $r_i$ [mm] | Convex portion height $h_i$ [mm] | Space portion radius $r_{iii}$ [mm] | Space portion height $h_{iii}$ [mm] | Slit portion width $a_{iv}$ [mm] | Slit portion height $h_{iv}$ [mm] | Inner space area ratio [%] | Sheet portion length $a_v$ | Displacement field Z-component ratio $d_P/d_Q$ | Composite region height $H=h_i+h_v$ [mm] | Convex portion equivalent diameter/ weight portion equivalent diameter $D_p/D_w$ | Composite region height / convex portion equivalent diameter $H/D_P$ | Vibration mode | Natural frequency [Hz] | Frequency shift amount [%] |
|---|---|---|---|---|---|---|---|---|---|---|---|---|---|---|---|---|
| Comparative Example B-3 | | 5.0 | 24.5 | 0.0 | 0.0 | 0.0 | 0.0 | - | 12 | 0.99 | 25 | 1.24 | 2.50 | longitudinal extension and contraction | 345 | - |

[Table 4]

| Location | Material | Specific Gravity (g/cm³) | Young's modulus (MPa) | Poisson's ratio | r (mm) | h (mm) | a (mm) |
|---|---|---|---|---|---|---|---|
| i, Convex portion | rubber | 1.05 | 1.9 | 0.49 | * | * | - |
| ii, Weight portion | iron | 7.85 | 211000 | 0.29 | 2 | 3.2 | 7 |
| iii, Space portion | air | - | - | - | * | * | - |
| iv, Slit portion | air | - | - | - | - | * | * |
| v, Sheet portion | rubber | 1.05 | 1.9 | 0.49 | - | 0.5 | * |
| * Listed in Table 2 | | | | | | | |

The embodiments in Comparative Examples B-1 to B-3 are those without the space portion iii and the slit portion iv in Examples A-1 to A-4, A-5, and A-6, respectively, and are references for calculating the frequency shift amounts. The embodiments in Examples A-1 to A-4 are for comparison, in which the unit cells have the same radius and height of the convex portion and the same area ratio of the space portion, but different slit heights $h_{iv}$. In Examples A-1 and A-2, which show the longitudinal extension and contraction vibration mode, the natural frequencies were 757 Hz and 580 Hz, respectively, while in Examples A-3 and A-4, which show the trampoline vibration mode, the natural frequencies were 410 Hz and 316 Hz, respectively, indicating that as the slit height $h_{iv}$ increased, the vibration mode shifted from the longitudinal extension and contraction mode to the trampoline mode, and the natural frequency was lowered. It was confirmed that the trampoline vibration mode had a larger frequency shift rate of the natural frequency than the longitudinal extension and contraction vibration mode, and was therefore more suitable for lowering the frequency.

The embodiments in Examples A-4 and A-5 are for comparison, in which the slit height $h_{iv}$ is adjusted such that the natural frequencies of the longitudinal extension and contraction vibration and the trampoline vibration are approximately equal. Even though the natural frequencies of both were almost the same, the height of the convex portion in Example A-5, which shows the longitudinal extension and contraction vibration mode, was 10.2 mm, while the height thereof in Example A-4, which shows the trampoline vibration mode, was 4.5 mm, indicating that the height of the convex portion was lower for the trampoline vibration mode that resonated at a certain natural frequency. Based on the above, it was confirmed that when designing the shape of the convex portion having the same frequency, the height of the convex portion was reduced more by utilizing the trampoline vibration mode than by utilizing the longitudinal extension and contraction vibration mode.

EXPLANATIONS OF LETTERS OR NUMERALS

11: Sheet portion
11a: Sheet surface
11b: Sheet surface
12: Space portion
12r: Space portion (convex portion)
12s: Space portion (sheet portion)
12t: Space portion (slit portion)
21: Convex portion
22: Convex forming portion
22': Tip side inner wall surface
23: Weight portion
23': Weight
24: Sound absorbing material
51: Support
100: Sound insulation sheet member
101: Sound insulation sheet member
200: Sound insulation structure
201: Sound insulation structure
S: Spring portion
Q: Rectangular portion

**Claims**

1. A sound insulation sheet member, comprising:

   a sheet portion having rubber elasticity; and
   at least one convex portion having rubber elasticity provided on at least one surface of the sheet portion,
   wherein the convex portion has a space portion, and
   the convex portion has a slit portion on a tip side inner wall surface of the convex portion.

2. The sound insulation sheet member according to claim 1, wherein the slit portion is formed in a circumferential shape on the tip side inner wall of the convex portion.

3. The sound insulation sheet member according to claim 2, wherein the sheet portion has a space portion, and the space portion of the sheet portion is provided so as to penetrate from a surface of the sheet portion opposite to a surface on which the convex portion is provided to the space portion in the convex portion.

4. The sound insulation sheet member according to claim 1, wherein the convex portion has a natural frequency satisfying a vibration mode of $d_P/d_Q \leq 0.8$ at, wherein $d_P$ represents a Z-component of a displacement field at an outer circumference of the tip side of the convex portion, and $d_Q$ represents a Z-component of a displacement field at a center portion of the tip side of the convex portion.

5. The sound insulation sheet member according to claim 3,

   wherein the convex portion has a weight portion on the tip side inner wall thereof, and
   the slit portion is formed in a circumferential shape around the weight portion.

6. The sound insulation sheet member according to claim 5, wherein the slit portion is formed in a circumferential shape along an outer wall shape of the convex portion.

7. The sound insulation sheet member according to any one of claims 2 to 6, wherein a ratio of a maximum cross-sectional area of the space portion to a cross-sectional area of the convex portion in a planar direction of the sheet portion is 90% or less.

8. The sound insulation sheet member according to any one of claims 2 to 7, wherein a ratio of a maximum cross-sectional area of the space portion to a cross-sectional area of the convex portion in a planar direction of the sheet portion is 20% or more.

9. The sound insulation sheet member according to any one of claims 2 to 8, wherein a ratio of a volume of the space portion to a volume of the convex portion is 10% or more.

10. The sound insulation sheet member according to any one of claims 2 to 9, wherein a part of the space portion in the convex portion is provided so as to reach at least one of the tip and side surfaces of the convex portion.

11. The sound insulation sheet member according to claim 10, wherein a ratio ($D_P/D_W$) of an equivalent diameter $D_P$ of the convex portion, as represented by the following formula, to an equivalent diameter $D_W$ of the weight portion, as represented by the following formula, is 1.25 or more:

$$D_P = 4A_P/p_P;$$

and

$$D_W = 4A_W/p_W,$$

wherein $D_P$ represents an equivalent diameter of the convex portion,
$D_W$ represents an equivalent diameter of the weight portion,
$A_P$ represents an area of a region formed by the outer circumference of the cross-section of the convex portion in the planar direction of the sheet portion,

$A_W$ represents an area of a region formed by the outer circumference of the cross-section of the weight portion in the planar direction of the sheet portion,

$p_P$ represents a length of the outer circumference of the cross-section of the convex portion in the planar direction of the sheet portion, and

$p_W$ represents a length of the outer circumference of the cross-section of the weight portion in the planar direction of the sheet portion.

12. The sound insulation sheet member according to claim 10 or 11, wherein a ratio ($H/D_P$) of a total value H of a height of the convex portion and a thickness of the sheet portion to an equivalent diameter $D_P$, as represented by the following formula, is 2.1 or less;

$$D_P = 4A_P/p_P,$$

wherein $D_P$ represents an equivalent diameter of the convex portion,

$A_P$ represents an area of a region formed by the outer circumference of the cross-section of the convex portion in the planar direction of the sheet portion, and

$p_P$ represents a length of the outer circumference of the cross-section of the convex portion in the planar direction of the sheet portion.

13. The sound insulation sheet member according to any one of claims 9 to 12, wherein at least a part of the weight portion is embedded in the convex portion.

14. The sound insulation sheet member according to any one of claims 1 to 13, being an integrally molded product.

15. A sound insulation structure comprising at least: the sound insulation sheet member according to any one of claims 1 to 14; and a support that supports the sound insulation sheet member.

16. The sound insulation structure according to claim 15, wherein the sheet portion and the convex portion each independently contain at least one selected from the group consisting of thermosetting elastomers, photocurable elastomers, and thermoplastic elastomers.

[FIG. 1]

[FIG. 2]

[FIG. 3]

(a)

(b)

(c)

(d)

[FIG. 4]

a)

22  21  12  11

b)

22  21  24  11

[FIG. 5]

mass

spring

adherend

[FIG. 6]

[FIG. 7]

[FIG. 8]

[FIG. 9]

(a)

(b)

(c)

(d)

[FIG. 10]

(a) Normal longitudinal vibration mode

$d_P \doteq d_Q$

$\rightarrow d_P/d_Q \sim 1$

normal state     contracted state     extended state

(b) Trampoline vibration mode

$d_P < d_Q$

$\rightarrow d_P/d_Q \leqq 0.8$

normal state     contracted state     extended state

[FIG. 11]

(a)

wall    spring    mass    spring    wall

(b)

[FIG. 12]

resonance direction

extension and contraction direction

$L$

$L + \Delta L$

[FIG. 13]

[FIG. 14]

[FIG. 15]

(a)

51

(b)

51

[FIG. 16]

(a)

(b)

(c)

[FIG. 17]

(a)

(b)

[FIG. 18]

[FIG. 19]

## INTERNATIONAL SEARCH REPORT

International application No.

**PCT/JP2023/036325**

| A. | CLASSIFICATION OF SUBJECT MATTER |
|---|---|

*G10K 11/16*(2006.01)i; *G10K 11/162*(2006.01)i; *G10K 11/172*(2006.01)i
FI:  G10K11/16 120; G10K11/162; G10K11/172

According to International Patent Classification (IPC) or to both national classification and IPC

| B. | FIELDS SEARCHED |
|---|---|

Minimum documentation searched (classification system followed by classification symbols)

G10K11/16; G10K11/162; G10K11/172

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2015-152794 A (KITAMURA, Zenji) 24 August 2015 (2015-08-24) paragraphs [0049]-[0056], [0062], [0064]-[0068], fig. 1-6, 10, 12-13 | 1-3, 7-10, 14-16 |
| A | | 4-6, 11-13 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 December 2023** | **26 December 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/036325**

| Patent document<br>cited in search report | Publication date<br>(day/month/year) | Patent family member(s) | Publication date<br>(day/month/year) |
|---|---|---|---|
| JP 2015-152794 A | 24 August 2015 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017135409 A